# EUROPEAN PATENT SPECIFICATION

(11) **EP 4 255 037 B1**
(45) Date of publication and mention of the grant of the patent: **24.09.2025**
(21) Application number: 21913917.7
(22) Date of filing: 15.12.2021
(51) Int. Cl.: H04W 52/02, H04W 72/0446, H04W 4/06, H04W 74/00, H04W 74/0816, H04W 84/12

(54) **SERVICE TRANSMISSION METHOD, APPARATUS AND SYSTEM**
DIENSTÜBERTRAGUNGSVERFAHREN, -VORRICHTUNG UND -SYSTEM
PROCÉDÉ, APPAREIL ET SYSTÈME DE TRANSMISSION DE SERVICE

(30) Priority: 28.12.2020 CN 202011585502
(43) Date of publication of application: 04.10.2023
(73) Proprietor: Huawei Technologies Co., Ltd., Shenzhen, Guangdong 518129 (CN)
(72) Inventor: YANG, Bo, Shenzhen, Guangdong 518129 (CN); HU, Yinliang, Shenzhen, Guangdong 518129 (CN); CHEN, Guangji, Shenzhen, Guangdong 518129 (CN)
(74) Representative: MERH-IP Matias Erny Reichl Hoffmann Patentanwälte PartG mbB
(86) International application number: PCT/CN2021/138397
(87) International publication number: WO 2022/143176

(56) References cited:
- EP-A1- 4 228 370
- EP-A1- 4 256 881
- EP-A2- 2 317 687
- WO-A1-2022/119497
- CN-A- 107 787 049
- CN-A- 108 124 515
- CN-A- 109 451 850
- CN-A- 110 326 269

## Description

This application claims priority to Chinese Patent Application No. 202011585502.7, filed with the China National Intellectual Property Administration on December 28, 2020 and entitled "SERVICE TRANSMISSION METHOD, APPARATUS, AND SYSTEM".

### TECHNICAL FIELD

This application relates to the field of communication technologies, and in particular, to a service transmission methods and apparatus.

### BACKGROUND

A target wake time (target wake time, TWT) mechanism is introduced in the 802.11ax standard. In this mechanism, an access point (access point, AP) negotiates with a terminal to establish a TWT service period (service period, SP), that is, a TWT SP. Out of the TWT SP, the terminal keeps sleeping (sleep). Within the TWT SP, the terminal wakes up and performs data exchange based on AP scheduling or channel contention. After data exchange, the terminal continues to enter a sleep mode. Based on the TWT mechanism, the AP may allocate different TWT SPs to a plurality of terminals, to reduce a quantity of terminals participating in channel contention within the TWT SPs, thereby reducing a collision probability, and reducing a channel access delay and a service delay.

However, in a process of establishing the TWT SP, the terminal needs to exchange a plurality of pieces of signaling with the AP, and the TWT SP is established at a granularity of the terminal. Therefore, when the AP establishes the TWT SPs for the plurality of terminals, a quantity of signaling packets is in direct proportion to the quantity of terminals, and signaling overheads are large. In addition, if a TWT SP is established for a terminal, all services of the terminal may be sent within the TWT SP. Compared with those of a terminal for which no TWT SP is established, all the services of the terminal have a higher transmission priority, which affects service fairness. Document EP 4256881 A1, which represents the prior art according to Article 54(3) EPC, relates to a communication apparatus and a communication method for prioritized traffic. The communication apparatus, comprising: a receiver, which, in operation, receives from another communication apparatus a notification of one or more priority service periods (SPs), each SP being a time period in which only frames belonging to a traffic type designated by the other communication apparatus are allowed to be transmitted; and circuitry, which, in operation, determines if at least one frame of the designated traffic type is to be transmitted in one of the one or more SPs, and refrains from transmitting during the one of the one of more SPs in response to the determination that there are no frames of the designated traffic type to be transmitted.
Document EP 4228370 A1, which represents the prior art according to Article 54(3) EPC, relates to a method for transmitting a frame of a wireless communication system. A non-access point station (non-AP STA) receives a beacon frame comprising a request type field from an AP and can receive a downlink frame or transmit an uplink frame in accordance with a specific field value included in the beacon frame. Here, the request type field comprises a specific field for indicating a target wake time (TWT) for a low latency operation, and, if the value of the specific field is set as a first specific value, a broadcast TWT service period (SP) is a TWT SP for the low latency operation.

Document EP2317687 A2 relates to high speed media access control, MAC, wherein communication resources on a shared medium are allocated by a designated AP within MAC frame intervals. The designated AP may set a MAC frame interval and transmit it within a MAC frame, wherein broadcast and control channels within the MAC frame may specify allocated durations in the MAC frame for stations to transmit.

### SUMMARY

This application provides a service transmission methods and apparatus, to reduce signaling overheads of configuring, by an access point, a transmission time of a low-delay service for a terminal, and further balance service fairness. The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention.

### BRIEF DESCRIPTION OF DRAWINGS

FIG. 1 is a schematic diagram of a structure of a communication system according to this application;
FIG. 2 is a diagram of a network architecture of multi-link communication according to this application;
FIG. 3 is a schematic diagram of a structure of a WLAN device according to this application;
FIG. 4a is a schematic diagram of a backoff procedure according to this application;
FIG. 4b is a schematic diagram of a data conflict according to this application;
FIG. 5 is a schematic diagram of a correspondence between a quantity of retransmission times and a backoff window according to this application;
FIG. 6 is a schematic diagram of setting a network allocation vector NAV according to this application;
FIG. 7 is a schematic diagram of probability distribution of a channel access delay according to this application;
FIG. 8 is a schematic diagram of P2P communication based on silence time protection according to this application;
FIG. 9 is a schematic diagram of communication based on a target wake time TWT according to this application;
FIG. 10 is a schematic diagram of a frame structure of a broadcast TWT element according to this application;
FIG. 11 is a schematic diagram of another frame structure of a broadcast TWT element according to this application;
FIG. 12 is a schematic flowchart of a service transmission method according to this application;
FIG. 13 is a schematic diagram 1 of a structure of a broadcast TWT information field according to this application;
FIG. 14 is a schematic diagram 2 of a structure of a broadcast TWT information field according to this application;
FIG. 15 is a schematic diagram of transmission of a first low-delay service according to this application;
FIG. 16 is a schematic diagram 3 of a structure of a broadcast TWT information field according to this application;
FIG. 17 is a schematic diagram 4 of a structure of a broadcast TWT information field according to this application;
FIG. 18 is a schematic diagram 5 of a structure of a broadcast TWT information field according to this application;
FIG. 19 is a schematic diagram 6 of a structure of a broadcast TWT information field according to this application;
FIG. 20 is a schematic diagram 7 of a structure of a broadcast TWT information field according to this application;
FIG. 21 is a schematic diagram 8 of a structure of a broadcast TWT information field according to this application;
FIG. 22 is a schematic diagram 9 of a structure of a broadcast TWT information field according to this application;
FIG. 23 is a schematic diagram of communication based on a first NAV according to this application;
FIG. 24 is another schematic diagram of communication based on a first NAV according to this application;
FIG. 25 is a schematic diagram of a structure of an access point according to this application;
FIG. 26 is a schematic diagram of a structure of a terminal according to this application; and
FIG. 27 is a schematic diagram of a structure of a communication apparatus according to this application.

### DESCRIPTION OF EMBODIMENTS

Unless otherwise specified, "/" in the descriptions of embodiments of this application represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists. A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one (piece) of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that, in this application, words "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

Embodiments of this application may be applied to a wireless local area network (wireless local area network, WLAN) scenario, and may be applied to an IEEE 802.11 system standard, for example, the 802.11a/b/g standard, the 802.11n standard, the 802.11ac standard, the 802.11ax standard, or a next-generation standard, for example, the 802.11be standard or a further next-generation standard. Alternatively, embodiments of this application may be applied to a wireless local area network system, for example, an internet of things (internet of things, IoT) network or a vehicle-to-everything (Vehicle to X, V2X) network. It is clear that embodiments of this application are also applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and a future 5th generation (5th generation, 5G) communication system.

This application provides a WLAN communication system to which an embodiment of this application is applicable. The WLAN communication system includes at least one wireless access point (access point, AP) and a plurality of terminals associated with the AP. It should be noted that the terminal in this embodiment of this application may also be referred to as a station (station, STA), and the terminal and the station may be mutually replaced. This is not specifically limited in the method provided in this application.

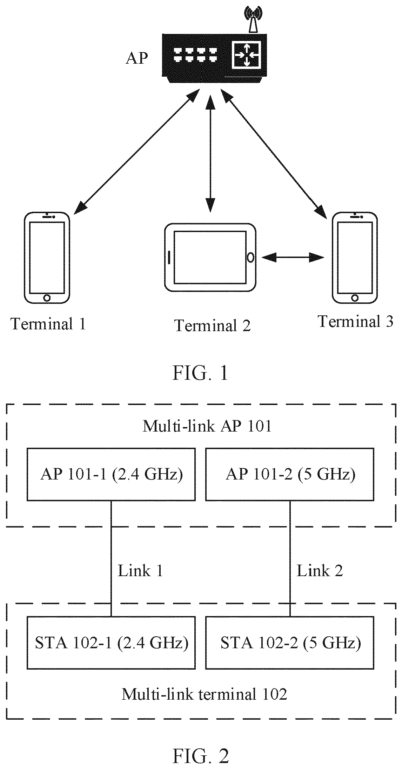

In an example, FIG. 1 is a diagram of an architecture of the WLAN communication system according to this application. In FIG. 1, an example in which the WLAN includes one AP, and the AP is associated with a terminal 1, a terminal 2, and a terminal 3. The AP may schedule a radio resource for a terminal associated with the AP and/or a terminal not associated with the AP, and transmit data for the terminal on the scheduled radio resource. For example, the AP may schedule radio resources for the terminal 1, the terminal 2, and the terminal 3, and transmit data, including uplink data information and/or downlink data information, for the terminal 1, the terminal 2, and the terminal 3 on the scheduled radio resources.

In addition, this embodiment of this application may be applied to communication between the AP and the terminal, for example, communication between the AP and the terminal 1, the terminal 2, or the terminal 3. This embodiment of this application may also be applied to communication between terminals, for example, communication between the terminal 2 and the terminal 3. In addition, the AP and the terminal in this embodiment of this application may be a wireless communication device that supports concurrent transmission on a plurality of links, for example, are referred to as a multi-link device (Multi-link device, MLD) or a multi-band device (multi-band device, MBD), and have higher transmission efficiency and a higher throughput. In this specification, an AP supporting communication on a plurality of links may be referred to as an MLD AP, and a terminal supporting communication on a plurality of links, namely, a multi-link terminal, may be referred to as a non-access point station (non-Access Point Station, non-AP STA). It should be understood that quantities of APs and terminals in FIG. 1 are merely examples, and may be more or less.

FIG. 2 is a diagram of a network architecture of multi-link communication according to an embodiment of this application. In a wireless local area network, a multi-link device communicates with another device on a plurality of links. FIG. 2 is a schematic diagram of communication between a multi-link AP device 101 and a multi-link terminal 102. The multi-link AP device 101 includes an affiliated AP 101-1 and an affiliated AP 101-2. The multi-link terminal 102 includes an affiliated STA 102-1 and an affiliated STA 102-2. The multi-link AP device 101 and the multi-link terminal 102 concurrently communicate on a link 1 and a link 2.

The multi-link device in embodiments of this application may be a single-antenna device, or may be a multi-antenna device. For example, the multi-link device may be a device with more than two antennas. A quantity of antennas included in the multi-link device is not limited in this embodiment of this application. In this embodiment of this application, the multi-link device may allow services of a same access type to be transmitted on different links, or even allow same data packets to be transmitted on different links. Alternatively, the multi-link device may not allow services of a same access type to be transmitted on different links, but may allow services of different access types to be transmitted on different links. The multi-link device may operate on a frequency band of sub 1 GHz, 2.4 GHz, 5 GHz, 6 GHz, and high-frequency 60 GHz.

The terminal in embodiments of this application may be a wireless communication chip, a wireless sensor, or a wireless communication terminal. For example, the terminal may be a user terminal, a user apparatus, an access apparatus, a subscriber station, a subscriber unit, a mobile station, a user agent, and user equipment capable of wireless fidelity (wireless fidelity, Wi-Fi) communication. The user terminal may be any one of various devices capable of wireless communication, such as a handheld device, a vehicle-mounted device, a wearable device, an internet of things (internet of things, IoT) device, a computing device, another processing device connected to a wireless modem, and user equipment (user equipment, UE) of various forms, a mobile station (mobile station, MS), a terminal (terminal), terminal equipment (terminal equipment), a portable communication device, a handheld device, a portable computing device, an entertainment device, a game device or system, a global positioning system device, any other suitable device configured for network communication via a wireless medium, and the like. In addition, the terminal may support the 802.11be standard. The terminal may also support a plurality of WLAN standards such as 802.11ax, 802.11ac, 802.11n, 802.11g, 802.11b, and 802.11a.

The AP in embodiments of this application may be an apparatus that is deployed in a wireless communication network to provide a wireless communication function for a STA associated with the AP. The AP is mainly deployed at home, inside a building, and in a campus, with a typical coverage radius of tens of meters to hundreds of meters. Certainly, the AP may alternatively be deployed outdoors. The AP is equivalent to a bridge that connects a wired network and a wireless network. The AP is mainly used to connect wireless network clients to each other, and then connect the wireless network to the Ethernet. Specifically, the AP may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP may support the 802.11be standard. The AP may also support WLAN standards such as 802.11ax, 802.11ac, 802.11n, 802.11g, 802.11b, and 802.11a.

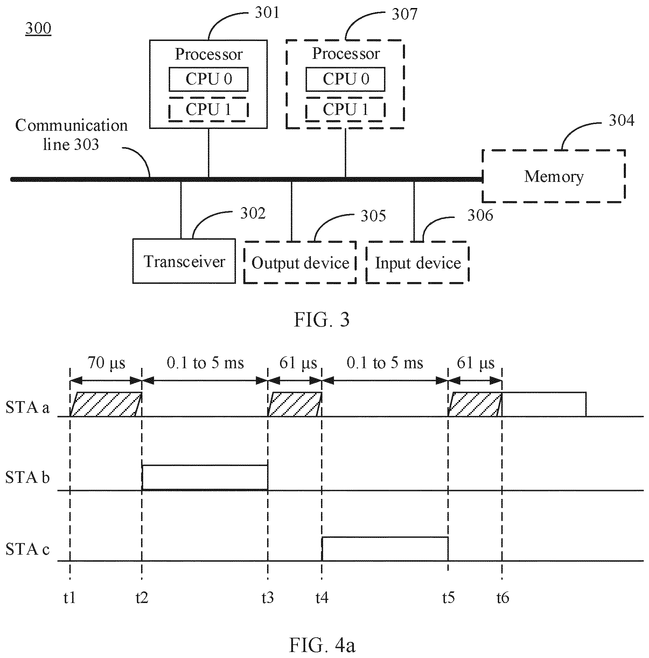

In some embodiments, the AP and the terminal in this application may be collectively referred to as a WLAN device. During specific implementation, the WLAN device may use a composition structure shown in FIG. 3, or include components shown in FIG. 3. FIG. 3 is a schematic composition diagram of a WLAN device 300 according to an embodiment of this application. The WLAN device 300 may be a terminal, a chip in a terminal, or a chip system (or referred to as a system on chip); or may be an AP, a chip in an AP, or a chip system (or referred to as a system on chip). In this embodiment of this application, the chip system may include a chip, or may include a chip and another discrete component.

As shown in FIG. 3, the WLAN device 300 includes a processor 301, a transceiver 302, and a communication line 303. Further, the WLAN device 300 may include a memory 304. The processor 301, the memory 304, and the transceiver 302 may be connected through the communication line 303.

The processor 301 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The transceiver 302 is configured to communicate with another device or another communication network. The another communication network may be an Ethernet, a radio access network (radio access network, RAN), a WLAN, or the like. The transceiver 302 may be a module, a circuit, a transceiver, or any apparatus that can implement communication.

The communication line 303 is configured to transmit information between the components included in the WLAN device 300.

The memory 304 is configured to store instructions. The instructions may be a computer program.

The memory 304 may be a read-only memory (read-only memory, ROM) or another type of static storage device that can store static information and/or instructions, or may be a random access memory (random access memory, RAM) or another type of dynamic storage device that can store information and/or instructions, an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or the like. This is not limited.

It should be noted that the memory 304 may exist independently of the processor 301, or may be integrated with the processor 301. The memory 304 may be configured to store instructions, program code, some data, or the like. The memory 304 may be located inside the WLAN device 300, or may be located outside the WLAN device 300. This is not limited. The processor 301 is configured to execute the instructions stored in the memory 304, to implement methods provided in the following embodiments of this application.

In an example, the processor 301 may include one or more CPUs, for example, a CPU 0 and a CPU 1 in FIG. 3.

In an optional implementation, the WLAN device 300 includes a plurality of processors. For example, in addition to the processor 301 in FIG. 3, the WLAN device 300 may further include a processor 307.

In an optional implementation, the WLAN device 300 further includes an output device 305 and an input device 306. For example, the input device 306 is a device such as a keyboard, a mouse, a microphone, or a joystick, and the output device 305 is a device such as a display or a speaker (speaker).

It should be understood that the composition structure shown in FIG. 3 does not constitute a limitation on the WLAN device. In addition to the components shown in FIG. 3, the WLAN device may include more or fewer components than those shown in the figure, or combine some components, or have different component arrangements.

The WLAN operates on an unlicensed frequency band. In other words, any WLAN device that meets a radio specification may send or receive data on this frequency band. However, there are a plurality of WLAN devices in the WLAN network. If the plurality of WLAN devices use a same channel to send data within a same time period, a collision is obviously caused, and the plurality of WLAN devices fail to send data. To reduce a collision between the WLAN devices in the WLAN network, it is stipulated that all the WLAN devices in the WLAN network may perform communication by using a carrier sense multiple access with collision avoidance (carrier sense multiple access with collision avoidance, CSMA/CA) mechanism. To be specific, before sending data, all the WLAN devices in the WLAN network may actively initiate a channel access procedure, and then may monitor a channel state by using the CSMA/CA mechanism, that is, determine whether the channel is idle. The channel is used to send data only when the channel is idle. If the channel is not idle, it indicates that the channel is being used by another WLAN device, and the channel is not used to send data.

Specifically, when a WLAN device in the WLAN network detects that a channel is idle, the WLAN device does not immediately send data, but starts to send data after a time period. For example, the WLAN device may randomly select a value (which may be briefly referred to as a random number) from a contention window (contending windows, CW), namely, [0, CW], and then start counting down after detecting that the channel is idle at a subsequent distributed interframe space (DCF interframe space, DIFS). That is, the random number is decreased by 1 for every channel idle time (usually 9 microseconds (µs)) of one slot time (slot time). If the channel in a slot time is busy before the random number is decreased to 0, counting is suspended. Then, when the channel changes from the busy state to the idle state, counting is resumed, and when the random number is decreased to 0, data is sent on the channel. Possible values of the CW include 31, 63, 127, 255, 511, and 1023. Corresponding backoff times are respectively 279 microseconds, 567 microseconds, 1143 microseconds, 2295 microseconds, 4599 microseconds, and 9207 microseconds. The DCF refers to a distributed coordination function (distributed coordination function, DCF).

Before the random number is decreased to 0, when the channel in a slot time is busy, counting is suspended. Therefore, when there are a large quantity of WLAN devices in the WLAN network, a time for decreasing a random number of a WLAN to 0 may be long. For example, one slot time is 9 microseconds. Refer to FIG. 4a. An initial value w of a random number selected by a STA a when the STA a accesses the channel is 10, the channel is idle in DIFS + 4 slot times between t1 and t2 (that is, 34 microseconds + 36 microseconds = 70 microseconds), and the random number selected by the STA a decreases from 10 to 6. Within 0.1 to 5 milliseconds (ms) between t2 and t3, a STA b uses the channel to send data, the channel becomes busy, and the STA a stops counting. The channel is idle in DIFS + 3 slot times between t3 and t4 (for example, 34 microseconds + 27 microseconds = 61 microseconds), and the random number selected by the STA a decreases from 6 to 3. Within 0.1 to 5 milliseconds between t4 and t5, a STA c uses the channel to send data, the channel becomes busy, and the STA a stops counting. The channel is idle in DIFS + 3 slot times between t5 and t6 (for example, 34 microseconds + 27 microseconds = 61 microseconds), the random number selected by the STA a decreases from 3 to 0, and the STA a starts to send data at t6. That is, a time in which the initial value w of the random number selected by the STA a is decreased to 0 far exceeds DIFS + w slot times.

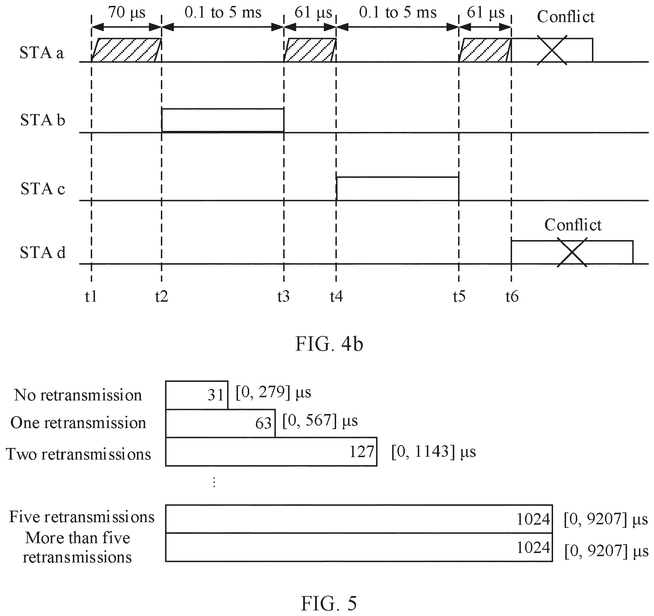

In addition, when there are a large quantity of WLAN devices in the WLAN network, the plurality of WLAN devices may simultaneously initiate a CSMA/CA-based channel access procedure, and a collision may still occur. For example, if the plurality of WLAN devices simultaneously detect that a channel is idle, and the plurality of WLAN devices select a same random number from the contention window, the plurality of WLAN devices select to send data at a same moment. It is clear that a collision occurs and data sending fails. For example, as shown in FIG. 4b, it is assumed that both the random number selected by the STA a and a random number selected by a STA d are decreased to 0 at t6. In this case, when the STA a and the STA d simultaneously send data at t6, a collision occurs. As a result, data sending of the STA a and the STA d fails.

In this case, if any one of the plurality of WLAN devices determines that data sending fails, it may be considered that the WLAN device collides with another WLAN device. In this case, the WLAN device may select to increase a maximum value in the CW to contend a channel again, to reduce a probability of a collision during next channel access. For example, FIG. 5 is a schematic diagram of a relationship between the contention window of the WLAN in the CSMA/CA mechanism and a quantity of retransmission times. For example, when there is no retransmission, that is, before the WLAN device starts to send data, a maximum value of a random number selected from the CW may be 31. When the WLAN device fails to send data for the first time, the WLAN device may increase the maximum value in the CW. In other words, the WLAN device may enlarge the CW. For example, the maximum value in the CW may be increased to 63. In this case, a range of the random number selected by the WLAN device from the CW is large, and the probability of the collision during next channel access may be reduced. It should be understood that, if data still fails to be sent after the WLAN device enlarges the contention window, namely, if a retransmission is needed again, the WLAN device may continue to enlarge the CW, for example, increase the maximum value in the CW to 127. By analogy, if the WLAN device fails to perform retransmission for five or more times, the maximum value of the CW may be increased to 1023.

It should be understood that, when there are more WLAN devices in the WLAN network, a collision probability is higher. Correspondingly, it may be learned from FIG. 5 that a larger average CW indicates a longer channel access time of the WLAN device. Especially in an office or home indoor environment, there is usually more than one WLAN network, and there is a contention relationship between intra-frequency WLAN networks. This causes a longer channel access delay for the WLAN device. When each WLAN device in the WLAN network contends for a channel, each WLAN device randomly selects a random number from the CW, and the WLAN device may further adjust a range of the CW. Therefore, a delay for each WLAN device to access the channel for sending data is random. In other words, the delay is uncertain.

To reduce a collision between the WLAN devices, the WLAN further defines a virtual carrier monitoring method, that is, a network allocation vector (network allocation vector, NAV). After obtaining a channel through contention, a WLAN device usually sends one or more frames. When the NAV method is used, the WLAN device that obtains the channel may set an NAV in a duration field in a MAC frame header included in each frame sent by the WLAN device, to notify another WLAN device of duration of using the channel by the WLAN device that currently obtains the channel. Another WLAN device that monitors the frame keeps silent within the duration, that is, stops contending for the channel.

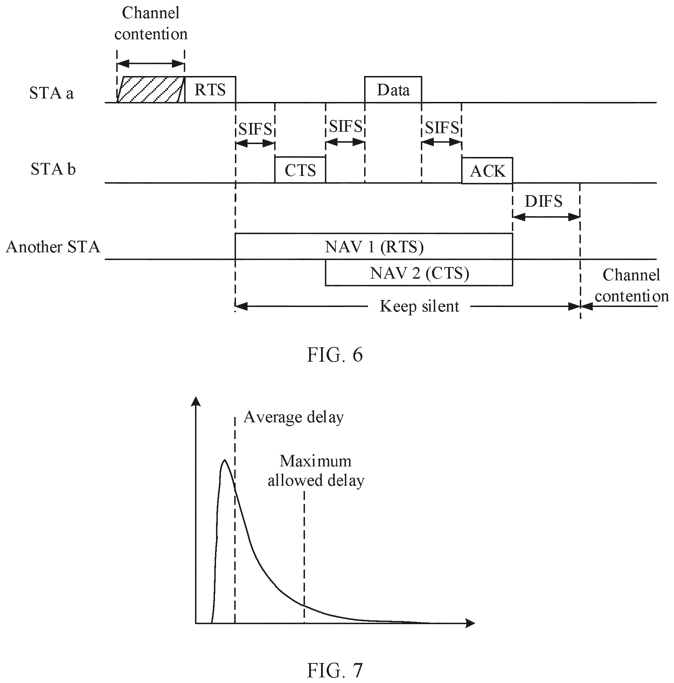

For example, as shown in FIG. 6, an example in which the STA a obtains the channel by contention, and the STA a and the STA b perform data transmission is used. After obtaining the channel by contention, the STA a sends a request to send (request to send, RTS) frame in a broadcast manner. An NAV 1 is set in the RTS frame to indicate the STA a to send a data frame to a specified receiver (the STA b) in a duration indicated by the NAV 1. After receiving the RTS frame and having a short interframe space (short interframe space, SIFS), the STA b transmits a clear to send (clear to send, CTS) frame in a broadcast manner to acknowledge transmission of the STAa. An NAV 2 is set in the CTS frame to indicate a duration of using the channel, a start moment of the duration indicated by the NAV 2 is an end moment of the CTS frame, and end moments of the duration indicated by the NAV 2 and the duration indicated by the NAV 1 are the same. Then, the STA a sends a data (Data) frame to the STA b, and the STA b returns an acknowledgment (acknowledgment, ACK) frame to the STA a. It may be understood that the data frame sent by the STA a and the ACK frame sent by the STA b also include an NAV, which is not shown in FIG. 6. Another STA that receives the RTS frame or the CTS frame within the duration indicated by the NAV 1 keeps silent, and the another STA starts to contend for a channel after a DIFS time at which the duration indicated by the NAV 1 ends.

Nevertheless, when there are a relatively large quantity of WLAN devices in the WLAN network, a plurality of WLAN devices may set NAVs during a backoff period of a WLAN device, which may cause a backoff time of the WLAN device that performs backoff to be prolonged. In addition, a duration of an NAV set in the another WLAN is uncertain, and a channel access delay of the WLAN device that performs backoff may also be uncertain.

When the WLAN device contends for a channel, a channel access delay of a data packet is generated. Due to uncertainty of the channel access delay, a channel access delay of a data packet sent by each WLAN device on a WLAN air interface in the WLAN network is in long tail distribution. For example, a probability distribution of the channel access delay may be shown in FIG. 7. Generally, access delays of most data packets are less than an average delay, and access delays of a few data packets are very long. For a low-delay service, delays of these data packets cannot meet a service delay requirement, resulting in service performance deterioration.

To provide better quality of service (quality of service, QoS) assurance for services (which may be referred to as high-priority service in this application) having a higher delay requirement, an enhanced distributed channel access (enhanced distributed channel access, EDCA) contention queue is introduced in the IEEE 802.11. For example, a value range of the CW is narrowed down by using the EDCA. The value range of the CW for a highest-priority voice queue may be defined as [7, 15]. The value range of the CW for a second-highest-priority video queue may be defined as [15, 31]. This can increase a probability for a high-priority service to contend for a channel, and shortens a delay of the high-priority service. Although the EDCA can increase the probability of the high-priority service to access the channel and shorten the delay of the high-priority service, contention and collisions of the high-priority service still exist. In addition, the decrease of the CW causes more frequent collisions of the high-priority service. Specifically, with the emergence of more and more types of high-priority services, for example, in the IEEE 802.11 real-time application (real-time application, RTA) interest group, a plurality of low-delay scenarios such as real-time online gaming, real-time video, industrial wireless, and unmanned aerial vehicle control are defined. A delay requirement range of each of these services is 1 ms to 100 ms, which is far beyond a delay requirement (300 ms) of a highest-priority service voice in an EDCA mechanism. The EDCA mechanism is still used, and the collision between high-priority services is more severe.

Therefore, a method for reducing the collision at a granularity of a single transmission is proposed in the 802.11ax. For example, a method for reducing point-to-point communication collisions is proposed. The point-to-point communication herein refers to communication between a plurality of terminals without an AP or a central control node, for example, point-to-point (point to point, P2P) communication, and also includes ad hoc communication. Compared with P2P communication, a network including an AP or a central control node may be denoted as an AP-STA network (communication) in this specification. When both the AP-STA network and a P2P network exist, some terminals are in the two networks, and are referred to as P2P terminals. The other terminals are in the AP-STA network, and are referred to as non-P2P terminals. When a P2P terminal notifies a non-P2P terminal in the AP-STA network that P2P communication may exist within a future time period, the non-P2P terminal may choose to back off a channel used for point-to-point transmission. This can shorten a channel access delay of the P2P terminal in point-to-point communication. In the following description, an example in which point-to-point communication is P2P communication is used. Both the P2P network and the AP-STA network are involved terminals that comply with the 802.11ax standard (which may be referred to as an HE terminal for short, that is, a Wi-Fi 6 device) or a terminal that complies with the 802.11be standard (that is, an extremely high throughput (Extremely High Throughput) terminal, which is referred to as an EHT terminal for short, that is, a Wi-Fi 7 terminal). Similarly, the involved AP is an AP that complies with the 802.11ax standard (that is, an HE AP) or an AP that complies with the 802.11be standard (that is, an EHT AP). In contrast, a terminal prior to the 802.11ax standard may be referred to as a legacy (legacy) terminal.

Because the non-P2P terminal cannot understand P2P scheduling information, interference may exist between two different systems (namely, the point-to-point network and the AP-STA network). It is stipulated in the 802.11ax that before initiating P2P communication, a terminal may send a quiet time period (quiet time period, QTP) request (request) to an HE AP. After receiving the request, the HE AP may send a quiet time period setup (quiet time period setup) frame to all other terminals. An HE terminal that receives the frame may choose to back off within a subsequent time period, to avoid a collision in P2P communication.

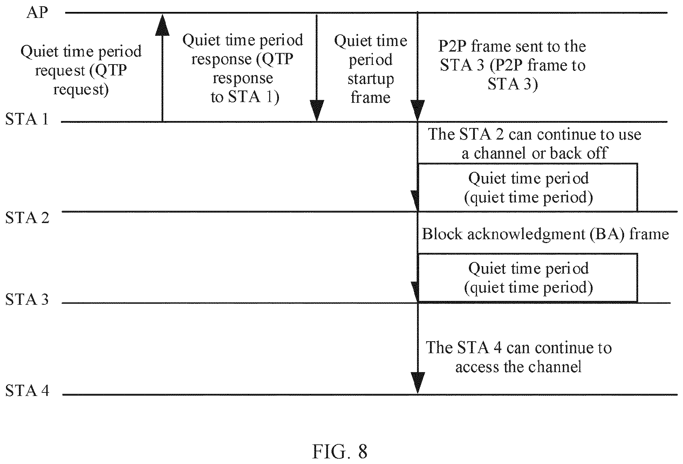

For ease of understanding, FIG. 8 is a schematic diagram of P2P communication based on quiet time period protection according to an embodiment of this application. For example, FIG. 8 shows four STAs: a STA 1, a STA 2, a STA 3, and a STA 4. The STA 1, the STA 2, and the STA 3 are all HE terminals. The STA 1 and the STA 3 are located in a P2P network, the STA 2 is not located in the P2P network, and the STA 4 is a legacy terminal.

It may be learned from FIG. 8 that before initiating P2P communication, the STA 1 sends a quiet time period request to an AP. After receiving the quiet time period request, the AP sends a response message of the quiet time period request, namely, a QTP response, to the STA 1. In addition, the AP sends a quiet time period setup (QTP setup) frame to all terminals (the STA 1 to the STA 4). Because the STA 1 requests to perform P2P communication with the STA 3, the STA 1 receives the QTP response and the QTP setup frame, and may send a P2P frame to the STA 3. After receiving the P2P frame, the STA 3 may send a block acknowledgment (block acknowledgment, BA) frame to the STA 1 within the quiet time period.

The STA 2 receives the QTP setup frame and may learn that a P2P service exists in the QTP. The STA 2 may choose to back off in the QTP, and release a channel. Certainly, the STA 2 may alternatively choose to continue to use the channel. In other words, the STA 2 determines whether to continue to use the channel, and the AP does not force the STA 2 to release the channel in the QTP. For example, if a service to be transmitted by the STA 2 has a low delay requirement, the STA 2 may choose to be quiet in the QTP, and actively release the channel. This can avoid an energy consumption increase of the STA 2 caused when the STA 2 may retransmit a service due to a collision. However, if the STA 2 actively backs off, the STA 2 has a long channel access delay. Therefore, in most cases, the STA 2 does not choose to actively back off. In this way, the STA 2 may still contend for the channel with the SAT 1 or the STA 3, and still causes a collision in P2P communication.

The STA 4 receives the QTP setup frame. Because the STA 4 is a legacy terminal, the STA 4 cannot identify the QTP setup frame. Therefore, the STA 4 still continues to access the channel even in the QTP, and is still likely to cause a collision in P2P communication.

In addition, in the method shown in FIG. 8, the terminal can send a QTP request only after accessing a channel based on a CSMA mechanism, and the terminal needs to send the QTP request, namely, a temporary QTP request, each time initiating P2P communication. Therefore, if network quality is poor, there is still a delay when the QTP request is sent. For the P2P service, a delay still cannot be determined.

In addition to the method shown in FIG. 8, a target wake time (target wake time, TWT) mechanism is introduced in the 802.11ax standard. In this mechanism, the AP and the STA negotiate to establish a TWT service period (service period, SP), that is, a TWT SP. Beyond the TWT SP, the STA keeps sleep (sleep). Within the TWT SP, the STA wakes up (awake), and performs data exchange based on channel contention. Alternatively, the AP performs data exchange based on scheduling of the AP. After data exchange, the AP continues to enter the sleep mode. By using the TWT mechanism, the AP may allocate different TWT SPs. In this way, a quantity of STAs that perform data exchange in each TWT SP is greatly reduced, to reduce a quantity of STAs participating in channel contention within the TWT SPs, thereby reducing a collision probability, and reducing a channel access delay and a service delay.

801.11ax defines two TWT modes: individual TWT (individual TWT) and broadcast TWT (broadcast TWT). The individual TWT is a one-to-one TWT SP established between the AP and the STA, and the STA may actively initiate a TWT SP establishment request, or may be unilaterally triggered by the AP. In this mode, the STA only focuses on a TWT SP established between the AP and itself, and does not know a TWT SP established between the AP and another STA. The broadcast TWT is managed by the AP. Alternatively, the STA can initiate a TWT SP establishment request or be triggered by the AP. In this mode, the AP announces a TWT SP to all STAs in a basic service set (basic service set, BSS) by using a broadcast frame, and the STA may apply to the AP to join a TWT SP announced by the AP, that is, become a member (member) of the TWT SP. Then, the STA may wake up and send data within the TWT SP to which the STA applies for joining.

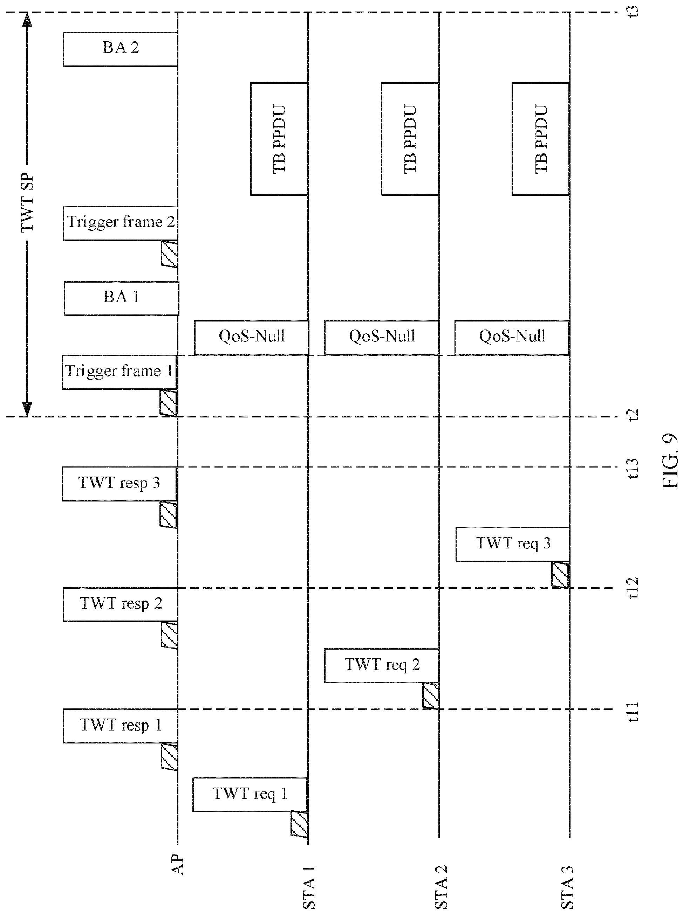

For example, FIG. 9 shows a process in which the STA and the AP negotiates the TWT SP in the personal TWT mode. The STA 1 is used as an example. The STA 1 first sends a TWT request (TWT request) 1 (denoted as a TWT req1) to the AP, to request the AP to establish a TWT SP for the STA 1. After receiving the TWT request 1 from the STA 1, the AP returns a TWT response (TWT response) 1 to the STA 1. The TWT response 1 indicates a TWT SP corresponding to the STA 1. In FIG. 9, an example in which the TWT SP established by the AP for the STA 1 is from t2 to t3 is used for description. Therefore, the STA 1 keeps sleep from t11 to t2. A process in which the STA 2 or the STA 3 and the AP negotiate to establish a TWT SP is similar to that of the STA 1, and details are not described herein. In FIG. 9, an example in which the AP establishes a same TWT SP for the STA 1, the STA 2, and the STA 3 is used for description. That is, the STA 2 keeps sleep from t12 to t2, and the STA 3 keeps sleep from t13 to t2. From t2 to t3 (that is, the TWT SP), the STA 1, the STA 2, and the STA 3 perform data exchange based on a trigger frame sent by the AP. Refer to FIG. 9. The AP first broadcasts a trigger (trigger) frame 1 to confirm whether the STA 1, the STA 2, and the STA 3 are woken up. If the STA 1, the STA 2, and the STA 3 are woken up, the STA 1, the STA 2, and the STA 3 separately send a QoS-Null frame to the AP to feed back that the STA 1, the STA 2, and the STA 3 are already in wakeup states. After receiving the QoS-Null frame, the AP may send a block acknowledgment (block ACK, BA) frame 1 used to feed back whether the QoS-Null frame is successfully received. Then, the AP may send a trigger frame 2 to the STA 1, the STA 2, and the STA 3 to schedule the STA 1, the STA 2, and the STA 3 to send data encapsulated in a trigger-based (Trigger-Based, TB) physical protocol data unit (physical protocol data unit, PPDU) (that is, a TB PPDU), and send a BA 2 used to feed back whether the TB PPDU is successfully received.

It may be understood that, in FIG. 9, the AP schedules the STA 1, the STA 2, and the STA 3 to send data. Therefore, the AP may schedule TB PPDUs of the three STAs to be sent on different frequency domain resources at the same time. That is, a frequency division multiplexing manner is used to avoid a collision between the three STAs.

In addition, within the TWT SP, the AP may not schedule data exchange of the STA 1, the STA 2, and the STA 3, and the three STAs initiate channel contention, and perform data exchange based on the channel contention. In this scenario, even if a plurality of STAs other than the STA 1, the STA 2, and the STA 3 exist in the WLAN network, the plurality of STAs cannot contend for a channel in TWT SPs corresponding to the STA 1, the STA 2, and the STA 3 due to limitations of the TWT SPs. Therefore, for the STA 1, the STA 2, and the STA 3, a quantity of STAs contending for a channel with the STA 1, the STA 2, and the STA 3 is reduced, thereby reducing a collision probability and a channel access delay.

However, in a process of establishing the TWT SP, the STA needs to exchange a plurality of pieces of signaling (for example, a TWT request and a TWT response) with the AP, and the TWT SP is established at a granularity of STAs. In other words, when establishing TWT SPs for a plurality of STAs, the AP needs to exchange a plurality of pieces of signaling with each STA. A TWT SP is established for each STA. A quantity of signaling messages is in direct proportion to the quantity of STAs, resulting in large signaling overheads. In addition, if a TWT SP is established for a STA, all services of the STA may be sent within the TWT SP. Compared with a STA for which no TWT SP is established, all services of the STA have a higher transmission priority, which affects service fairness.

Based on this, this application provides a service transmission method, to reduce signaling overheads of configuring, by an access point, a transmission time of a low-delay service for a terminal, and further balance service fairness.

Before the service transmission method provided in this application is described, a frame format of a broadcast TWT element (element) in a broadcast TWT mode in this application is first described.

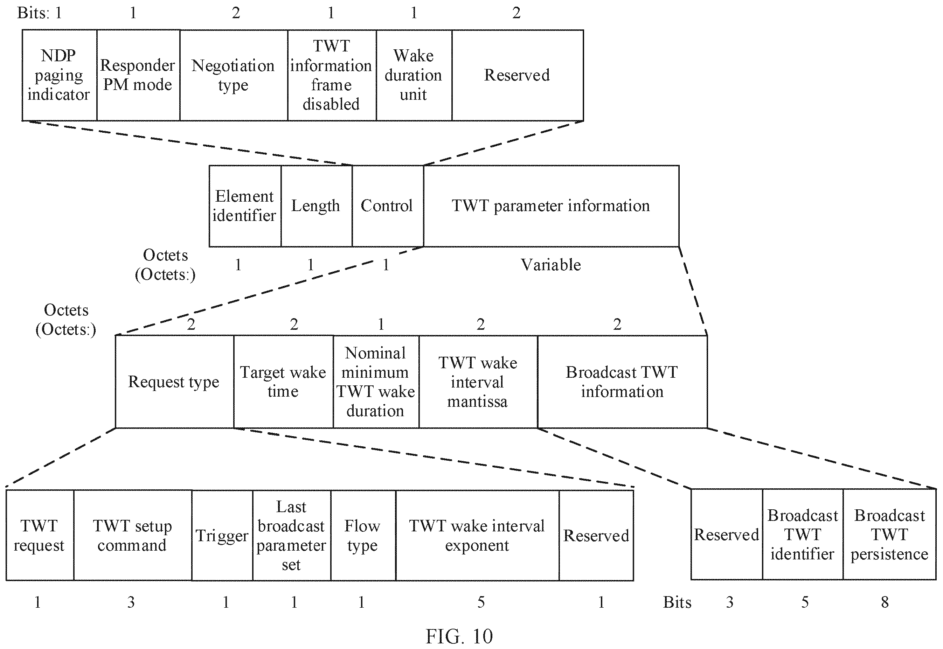

For example, FIG. 10 shows a frame format of a broadcast TWT element (element) used in a process in which the AP negotiates with the STA to establish the TWT SP in the broadcast TWT mode. As shown in FIG. 10, the broadcast TWT element includes a 1-byte element identifier (element identifier, element ID) field, a 1-byte length (length) field, a 1-byte control (control) field, and a TWT parameter information field. The length field indicates a length of the TWT element; the control field is used to carry TWT control information; and a length of the TWT parameter information field is variable, and is used to carry a TWT parameter.

Further, the control field may include a 1-bit null data physical frame (null data PPDU, NDP) paging indicator (NDP Paging Indicator) field, a 1-bit responder power management (power management, PM) mode (Responder PM Mode) field, a 2-bit negotiation type (Negotiation Type) field, a 1-bit TWT information frame disabled (TWT Information Frame Disabled) field, and a 1-bit wake duration unit (Wake Duration Unit) field, and a 2-bit reserved (reserved) field.

Further, the TWT parameter information may include a 2-byte request type (Request Type) field, a 2-byte target wake time (Target Wake Time) field, a 1-byte nominal minimum TWT wake duration (Nominal Minimum TWT Wake Duration) field, a 2-byte TWT wake interval mantissa (TWT Wake Interval Mantissa) field, and a 2-byte broadcast TWT information (Broadcast TWT Info) field.

The request type field may further include a 1-bit TWT request (TWT Request) field, a 3-bit TWT setup command (TWT Setup Command) field, a 1-bit trigger (Trigger) field, a 1-bit last broadcast parameter set (Last Broadcast Parameter Set) field, a 1-bit flow type (Flow Type) field, a 3-bit broadcast TWT recommendation (Broadcast TWT Recommendation) field, a 5-bit TWT wake interval exponent (TWT Wake Interval Exponent) field, and a 1-bit reserved (Reserved) field.

The broadcast TWT information field may further include a 3-bit reserved (Reserved) field, a 5-bit broadcast TWT identifier (Broadcast TWT ID) field, and an 8-bit broadcast TWT persistence (Broadcast TWT Persistence) field.

The following describes functions of some fields of the broadcast TWT element frame in this application. For descriptions of other fields, refer to definitions in the 801. 11 ax standard. Details are not described herein again.

The negotiation type field indicates whether the current TWT element is an individual TWT element or a broadcast TWT element. For example, when the negotiation type field is set to 0, the current TWT element is the individual TWT element. When the negotiation type field is set to 2, the current TWT element is the broadcast TWT element.

The TWT request field indicates whether the current TWT element is sent by the AP or by the STA. It should be noted that, when the current TWT element is a TWT element sent by the STA, the current TWT element may be used by the STA to request to join a broadcast TWT SP.

The TWT setup command field indicates a TWT command. When the TWT element is sent by the STA, a value of the TWT setup command field may be 0, 1, 2, or 7. When the TWT element is sent by the AP, a value of the TWT setup command field may be 4, 5, 6, or 7. A TWT command (or referred to as a command name) indicated by each value of the TWT setup command field may be shown in the following Table 1.

**Table 1**

| Value of a TWT setup command field | TWT command (Command name) |
|---|---|
| 0 | Request TWT (Request TWT) |
| 1 | Suggest TWT (Suggest TWT) |
| 2 | Demand TWT (Demand TWT) |
| 3 | TWT grouping (TWT Grouping) |
| 4 | Accept TWT (Accept TWT) |
| 5 | Alternate TWT (Alternate TWT) |
| 6 | Dictate TWT (Dictate TWT) |
| 7 | Reject TWT (Reject TWT) |

When the STA requests the TWT from the AP, if the TWT command is the request TWT, it indicates that the STA sets no limitation on the requested TWT, or the STA does not specify a condition that the TWT requested by the STA meets. If the TWT command is the suggest TWT, it indicates that the STA recommends, to the AP, a parameter of the TWT requested by the STA, or that the STA recommends a condition that the TWT requested by the STA meets. If the TWT command is the demand TWT, the STA requires the AP to establish a TWT that meets a condition specified by the STA. When the AP configures the TWT for the STA, if the TWT command is the accept TWT, it indicates that the AP accepts recommendation of the STA and configures a TWT recommended by the STA for the STA. If the TWT command is the alternate TWT, it indicates that a TWT configured by the AP for the STA meets some parameters recommended by the STA. If the TWT command is the dictate TWT, the AP configures a TWT specified by the AP for the STA.

The target wake time field, the nominal minimum TWT wake duration field, and the TWT wake interval mantissa field are TWT SP parameters, and respectively indicate a start time of the TWT SP, a duration of the TWT SP, and an interval between adjacent TWT SPs.

The broadcast TWT ID field uniquely identifies one TWT SP. One TWT SP is identified by using a <Broadcast TWT ID, MAC Address> 2-tuple, where the MAC address is a media access control (media access control, MAC) address of the AP.

With reference to the accompanying drawings, the following describes the technical solutions provided in embodiments of this application.

It should be noted that, in the following embodiments of this application, unless otherwise specified, all related TWT elements refer to the broadcast TWT element. However, a frame structure of the broadcast TWT element in this application is not limited to that shown in FIG. 10.

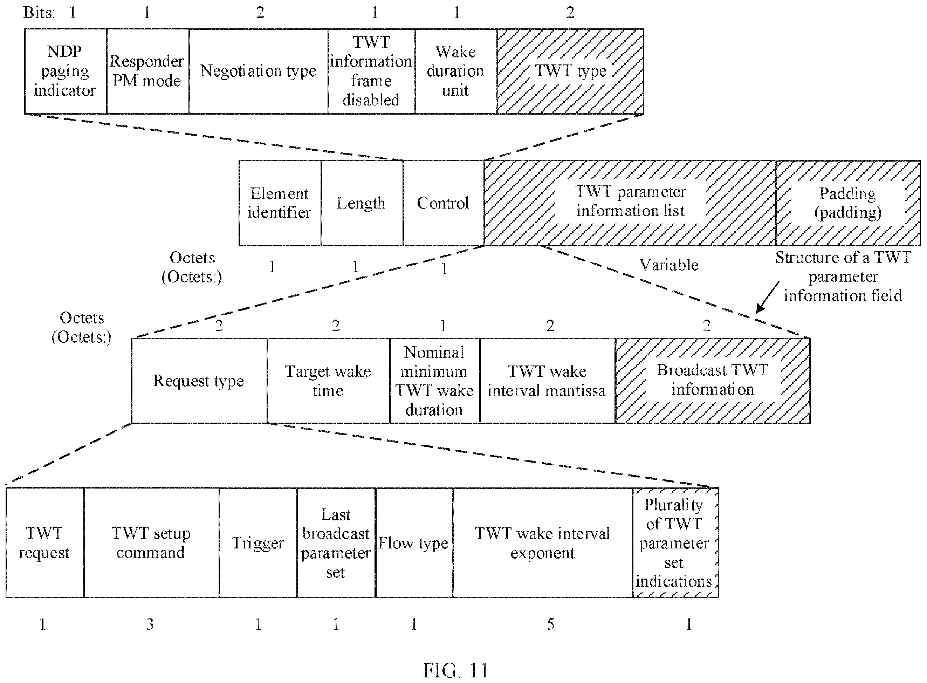

In an example, a frame structure of the TWT element in this application is shown in FIG. 11. A field padded with a pattern represents a distinguishing field from that in the frame structure shown in FIG. 10. Refer to FIG. 11. In the TWT element provided in this application, a 2-bit "reserved field" of the "control field" shown in FIG. 10 is used as a "TWT type (TWT Type)" field. The "TWT parameter information" field shown in FIG. 10 is extended to a "TWT parameter information list (TWT Parameter Information List)" field, and the TWT parameter information list field includes one or more TWT parameter information fields. "A padding (padding)" field is added after the TWT parameter information list field. The field is an optional field and is used to adjust a length of the TWT element, so that the TWT element meets a specific length. If the padding field is not required, the TWT element can meet a specific length. This field may not be included. The 1-bit "reserved field" in the "request type" field shown in FIG. 10 is used as a "more TWT parameter set indication" field, to indicate whether the current TWT parameter information field is the last TWT parameter information field in the TWT parameter information list field. In addition, the "broadcast TWT information" field shown in FIG. 10 is modified. Functions or information carried by the distinguishing fields shown in FIG. 11 are described in subsequent embodiments. Details are not described herein again.

It should be noted that a length of each field in this application is merely an example for description. In this application, it is not limited that the length of each field needs to be the length provided in this application, and the length of each field may be longer or shorter than the length provided in this application.

It should be noted that, in the following embodiments of this application, a name of a message between the apparatuses, a name of each parameter, a name of each piece of information, or the like is merely an example, and may be another name in another embodiment. This is not specifically limited in the method provided in this application.

It may be understood that, in embodiments of this application, the access point and/or the terminal may perform some or all steps in embodiments of this application. These steps or operations are merely examples. In embodiments of this application, other operations or variants of the operations may be further performed. In addition, the steps may be performed in a sequence different from a sequence presented in embodiments of this application, and not all the operations in embodiments of this application may be necessarily performed.

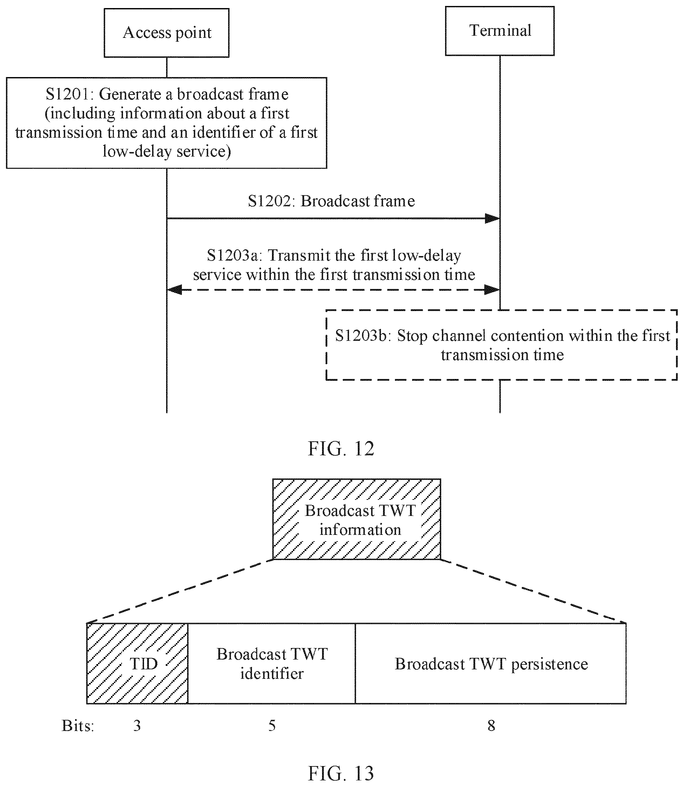

FIG. 12 is a schematic flowchart of a service transmission method according to an embodiment of this application. The following uses an example in which the method provided in this embodiment of this application is applied to the application scenario shown in FIG. 1. Certainly, this embodiment of this application may also be applied to another possible communication scenario or communication system. A service transmission delay may be shortened by using the method provided in this embodiment of this application in all scenarios having a high service delay requirement.

Specifically, as shown in FIG. 12, the service transmission method provided in this application includes the following steps.

S1201: An access point generates a broadcast frame.

The broadcast frame includes information about a first transmission time and an identifier of a first low-delay service, the first transmission time is used to transmit the first low-delay service, and the first low-delay service is a low-delay service of at least one first terminal.

In some embodiments, the "transmission time" in this application may be referred to as a "restricted (Restricted) TWT SP", that is, a restricted TWT SP. The transmission time and the restricted TWT SP may be mutually replaced. This is not specifically limited in this application.

It should be noted that, unless otherwise specified, the "transmission time" in this application refers to a time that is set by the access point and used to reduce a sending delay of the low-delay service, and within the transmission time, the low-delay service has a higher transmission priority than a non-low-delay service. In addition, in this application, it is not limited that the first low-delay service can be transmitted only within the first transmission time. The first low-delay service may be transmitted beyond the first transmission time.

It may be understood that the "first terminal" in this application may be understood as a terminal whose services include the first low-delay service.

In some embodiments, the "first terminal" in this application is a terminal in a basic service set (basic service set, BSS) corresponding to the access point. The "at least one first terminal" includes some or all first terminals in the BSS.

S1202: The access point sends the broadcast frame. Correspondingly, the terminal receives the broadcast frame from the access point.

It may be understood that the broadcast frame sent by the access point can be received by a plurality of terminals in the BSS. In the following steps S1203a and S1203b in this application, a terminal that receives the broadcast frame is used as an example for description. It should be understood that the plurality of terminals that receive the broadcast frame have same or similar processing actions.

In some embodiments, after receiving the broadcast frame sent by the access point, the terminal may determine whether services of the terminal include the first low-delay service. When the services of the terminal include the first low-delay service, the terminal performs the following step S1203a, or when the services of the terminal do not include the first low-delay service, the terminal performs the following step S1203b.

S1203a: The terminal transmits the first low-delay service within the first transmission time.

In some embodiments, the terminal may transmit the first low-delay service within the first transmission time based on scheduling of the access point, or the terminal may first perform channel contention within the first transmission time, and transmit the first low-delay service after successfully accessing a channel.

For example, if a receiving end of the first low-delay service of the terminal is the access point, that is, the first low-delay service is an uplink low-delay service, the terminal may transmit the first low-delay service within the first transmission time based on scheduling of the access point. Alternatively, if a receiving end of the first low-delay service of the terminal is another terminal, the terminal may first perform channel contention within the first transmission time, and transmit the first low-delay service after successfully accessing a channel.

S 1203b: The terminal stops channel contention within the first transmission time.

It should be noted that, in this application, it is not limited that when the services of the terminal do not include the first low-delay service, the terminal needs to stop channel contention within the first transmission time. It is only recommended that the terminal needs to stop channel contention within the first transmission time. Whether the terminal stops channel contention or not depends on a service requirement of the terminal. That is, in some embodiments, step S 1203b may be replaced with: The terminal determines whether to stop channel contention within the first transmission time.

In some embodiments, if the services of the terminal do not include the first low-delay service, and does not include a low-delay service other than the first low-delay service, the terminal may stop channel contention within the first transmission time. If the services of the terminal do not include the first low-delay service, but includes a low-delay service other than the first low-delay service, and a delay requirement of the low-delay service is higher than that of the first low-delay service, the terminal may continue to perform channel contention within the first transmission time.

Based on the service transmission solution provided in this application, because the access point configures the first transmission time of the first low-delay service by using the broadcast frame, a plurality of first terminals can transmit the first low-delay service within the first transmission time, and the access point does not need to separately send signaling to each first terminal to configure the first transmission time, thereby reducing signaling overheads. In addition, the first transmission time is used to transmit the first low-delay service. Therefore, the first terminal cannot transmit a service other than the first low-delay service within the first transmission time. Therefore, a service of another terminal other than the first low-delay service and another service of the first terminal have a same priority within the first transmission time, that is, neither of them can be transmitted within the first transmission time, thereby balancing service fairness. Then, when the services of the terminal that receives the broadcast frame does not include the first low-delay service, the terminal may stop channel contention within the first transmission time, to reduce a quantity of terminals participating in the channel contention within the first transmission time, and reduce a channel access delay of the first terminal, thereby reducing a delay of the first low-delay service.

The following further describes the service transmission method provided in this application.

In different embodiments of this application, the access point may obtain information about the low-delay service of the terminal in the BSS in different manners.

In some embodiments, the access point may obtain the information about the low-delay service of the terminal by using historical transmission information. For example, before the service transmission method in this application is performed, the access point transmits an excessively low-delay service 1 with a terminal 1, and transmits an excessively low-delay service 2 with a terminal 2. In this case, the access point can learn that services of the terminal 1 include the low-delay service 1 and services of the terminal 2 include the low-delay service 2. Further, information about the low-delay service 1 and the low-delay service 2, for example, quality of service (quality of service, QoS) requirement information, may be obtained based on previous transmission.

In some other embodiments, the access point may obtain the information about the low-delay service of the terminal through reporting by the terminal. For example, when the low-delay service arrives at the terminal, if the terminal detects that network quality is good, the terminal may send service report information to the access point, where the service report information may include first type information and QoS requirement information of the low-delay service of the terminal, and further includes an identifier of the low-delay service. The first type information indicates a type of the service report information, and further indicates that the type of the service report information is QoS reporting. The QoS requirement information may include, for example, a service volume, a service period, a delay requirement of a service, or the like.

It may be understood that, when the low-delay service arrives, if detecting that network quality is good, the terminal whose services include the low-delay service may send the service report information to the access point. For example, services of the terminal 1 include the low-delay service 1. When the low-delay service 1 arrives, if the terminal 1 detects that network quality is good, the terminal 1 sends service report information to the access point, and reports QoS requirement information of the low-delay service 1. Services of the terminal 2 include the low-delay service 2. When the low-delay service 2 arrives, if the terminal 2 detects that network quality is good, the terminal 2 sends service report information to the access point, and reports QoS requirement information of the low-delay service 2. Certainly, there may be a plurality of terminals 1 and terminals 2.

In addition, services of a terminal may include a plurality of low-delay services. When each low-delay service arrives, if network quality is good, the terminal may send service report information to the access point. For example, in addition to the low-delay service 1, the services of the terminal 1 further include a low-delay service 3. In this case, when the low-delay service 3 of the terminal 1 arrives, if the terminal 1 detects that network quality is good, the terminal 1 may also send service report information of the low-delay service 3 to the access point.

In an example, the terminal only needs to report service report information of a low-delay service to the access point when the low-delay service arrives for the first time, and does not need to send the service report information of the low-delay service when each data packet of the low-delay service arrives. That is, for a low-delay service, the terminal sends service report information of the low-delay service once, thereby reducing signaling overheads.

Specifically, for a bearing solution of the service report information, this application provides the following several implementations:

In a possible implementation, the QoS requirement information of the low-delay service, of the terminal, that is included in the service report information in this application is carried in a first field of a TWT element, and the first type information is carried in a first subfield of a second field of the TWT element. The first field carries TWT parameter information, and the second field carries TWT control information.

For example, when a frame structure of the TWT element is shown in FIG. 11, the second field may be a control field, and the first subfield of the second field may be a TWT type field. The TWT type field may be used to distinguish that a current TWT element is used for QoS reporting (that is, QoS report), is used for a restricted TWT SP, or is used for a conventional TWT SP. Specifically, meanings corresponding to values of the TWT type field are shown in Table 2. The conventional TWT SP refers to a TWT SP used to save power consumption.

**Table 2**

| TWT type field | Meaning | Description |
|---|---|---|
| First value (for example, 0) | QoS reporting | Used for QoS reporting and not requiring the access point to configure a transmission time immediately |
| Second value (for example, 1) | Restricted TWT SP | Used for configuration of a transmission time. The terminal may send a configuration request of the transmission time, and the access point responds to the request; or the access point directly configures the transmission time |
| Third value (for example, 2) | Reserved | Reserved |
| Fourth value (for example, 3) | Regular TWT SP | Conventional TWT SP |

For example, the first field may be a TWT parameter information field in a TWT parameter information list in the TWT element. Specifically, the QoS requirement information of the low-delay service may be carried in a target wake time field, a nominal minimum TWT wake duration field, and a TWT wake interval mantissa field of the TWT parameter information field.

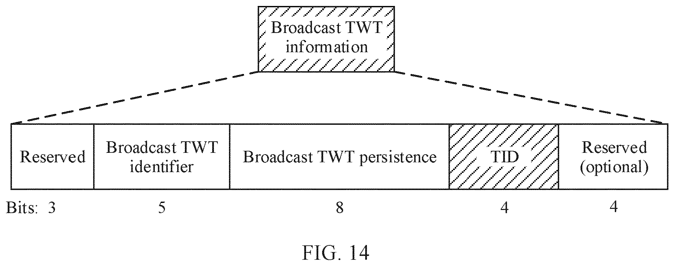

Further, a TWT broadcast information field of the TWT parameter information field may carry the identifier of the low-delay service. For example, refer to FIG. 13. A 3-bit "reserved field" of the TWT broadcast information field in the frame structure shown in FIG. 10 may be used as a "service identifier (traffic identifier, TID)" field, and carries the identifier of the low-delay service. Alternatively, refer to FIG. 14. A 4-bit "TID" field may be extended at a tail of the TWT broadcast information field in the frame structure shown in FIG. 10, and carries the identifier of the low-delay service. Optionally, a 4-bit reserved field may be extended after the TID field, so that a length of the TWT broadcast information field is an integer multiple of a length of one byte.

In this possible implementation, if the services of the terminal include a plurality of different types of low-delay services, the TWT element may include a plurality of corresponding TWT parameter information fields, and one TWT parameter information field carries QoS requirement information of one low-delay service.

In an example, the identifier of the low-delay service in this application may be negotiated by the terminal and the access point. In this scenario, a same low-delay service may have different identifiers on different terminals. For example, for a video call service, the service identifier negotiated by the terminal 1 and the access point may be an identifier 1, and the service identifier negotiated by the terminal 2 and the access point may be an identifier 2. Alternatively, the identifier of the low-delay service in this application may be uniformly defined by the access point or the standard in the BSS. In this scenario, a same low-delay service may have same identifiers on different terminals. For example, for a video call service, the access point may define a service identifier of the video call service as an identifier 1, and therefore both the terminal 1 and the terminal 2 use the identifier 1 as the identifier of the video call service.

In another possible implementation, the QoS requirement information of the low-delay service, of the terminal, that is included in the service report information in this application is carried in an A-control (A-control) field of a media access control (media access control, MAC) frame, and the first type information is carried in a first subfield of a second field of the TWT element. For the first subfield of the second field of the TWT element, refer to the description in the foregoing possible implementation. Details are not described herein again.

In still another possible implementation, the QoS requirement information of the low-delay service, of the terminal, that is included in the service report information in this application is carried in a first element, and the first type information is carried in a first subfield of a second field of the TWT element. For the first subfield of the second field of the TWT element, refer to the description in the foregoing possible implementation. Details are not described herein again.

In an example, the first element is a service information element of a traffic specification (traffic specification, TSPEC). Alternatively, the first element is an element obtained based on a service information element of a TSPEC, for example, an element obtained after some fields of the service information element of the TSPEC are redefined, an element obtained after extension of the service information element of the TSPEC is performed, or an element obtained after some fields of the service information element of the TSPEC are deleted.

Based on the A-control field of the MAC frame, the service information element of the TSPEC, or a feature of the element obtained based on the service information element of the TSPEC, more detailed QoS requirement information of the low-delay service may be carried by using any one of them. In addition, other more service information may be carried, for example, an average data rate, a minimum data rate, a maximum data rate, an average MAC service data packet (MAC Service Data Unit, MSDU) size, a maximum MSDU size, a minimum service interval, and a maximum service interval. In this way, detailed service information is provided for the access point, so that the access point more accurately collects the low-delay service in the BSS.

It should be noted that the "service report information" in this application is merely a general term for the first type information and the QoS requirement information of the low-delay service. A name of the "service report information" in this application is not specifically limited, and the "service report information" may alternatively have another name, for example, "first information". This is not specifically limited in this application.

In an example, after the access point receives the service report information from the terminal, if network quality is good, the access point replies with an ACK frame to feed back, to the terminal, the service report information, of the terminal, received by the access point. That is, after receiving the service report information, the access point may not immediately configure the transmission time.

So far, based on the foregoing method, the access point may collect a requirement of the low-delay service in the BSS, and obtain information about all low-delay services.

In different embodiments of this application, actions of generating and sending the broadcast frame by the access point may be triggered by different events.

In some embodiments, if the services of the terminal include the first low-delay service, and the terminal detects that network quality does not meet a delay requirement of the first low-delay service, the terminal may send first request information to the access point, where the first request information requests to configure the first transmission time for the terminal. Correspondingly, the access point receives the first request information, and generates and sends the broadcast frame.

In an example, the first request information may be carried in a TWT element. Specifically, when a frame structure of the TWT element is shown in FIG. 11, a second value of the TWT type field indicates the first request information. In addition, the terminal may set a TWT setup command field of the TWT element to 0, 1, or 2, and set a negotiation type field to 0 or 2.

In some other embodiments, the access point detects network quality, and when detecting that network quality is poor, the access point actively generates and sends the broadcast frame.

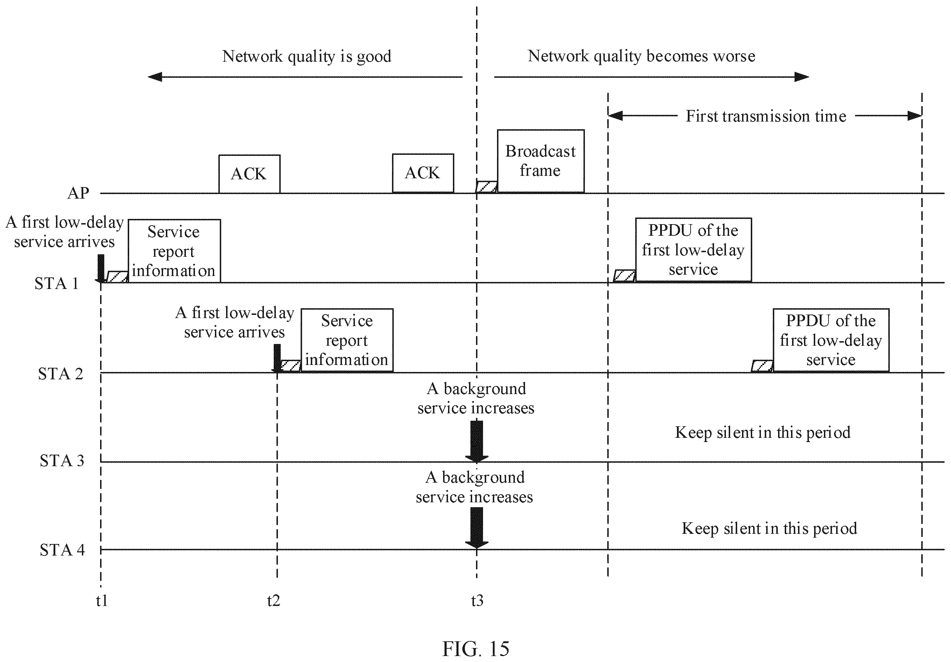

In an example, refer to FIG. 15. An example in which the BSS includes a STA 1, a STA 2, a STA 3, and a STA 4, services of the STA 1 and the STA 2 include the first low-delay service, and services of the STA 3 and the STA 4 do not include the first low-delay service is used. At t1, the first low-delay service of the STA 1 arrives. In this case, network quality is good, the STA 1 sends service report information to the AP, and the AP returns an ACK 1 to the STA 1. At t2, the first low-delay service of the STA 2 arrives. In this case, network quality is good, the STA 2 sends service report information to the AP, and the AP returns an ACK 2 to the STA 2. At t3, network quality deteriorates because background services of the STA 3 and the STA 4 increase. After detecting this change, the AP generates and sends a broadcast frame to configure the first transmission time. Then, the STA 1 and the STA 2 transmit the first low-delay service within the first transmission time, and the STA 3 and the STA 4 keeps silent within the first transmission time, that is, stop channel contention.

In an example, the access point may generate the broadcast frame based on the requirement of the low-delay service in the BSS, a quantity of users of the low-delay service, and the like that are collected by the access point.

In some embodiments, as described in step S1201, the broadcast frame in this application includes the information about the first transmission time and the identifier of the first low-delay service. If the services of the terminal that receives the broadcast frame includes the first low-delay service, the first low-delay service may be transmitted within the first transmission time. In other words, the access point does not limit a usage object of the first transmission time.

In this scenario, "the first transmission time" in this application may be understood as "a first shared transmission time" or "a first shared Restricted TWT SP".

In an example, in this scenario, the information about the first transmission time and the identifier of the first low-delay service may be carried in a first field of a TWT element, and the first field carries TWT information. For example, when a frame structure of the TWT element is shown in FIG. 11, the first field is a TWT parameter information field in a TWT parameter information list field.

Specifically, the information about the first transmission time may be carried in a target wake time field, a nominal minimum TWT wake duration field, and a TWT wake interval mantissa field, which respectively indicate a start time of the first transmission time, a duration of the first transmission time, and an interval between adjacent first transmission times.

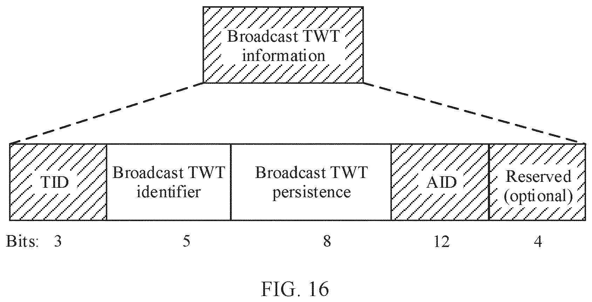

The identifier of the first low-delay service may be carried in a broadcast TWT information field. For example, as shown in FIG. 16, a 3-bit "reserved field" of the broadcast TWT information field in the frame structure shown in FIG. 10 may be used as a "TID" field to carry the identifier of the first low-delay service. The identifier of the first low-delay service may be uniformly defined by the access point or the standard. In addition, a 12-bit "association identifier (association identifier, AID)" field is further extended, and the AID field is set to a specific value to indicate that a first transmission time currently configured for the TWT element is the first shared transmission time. Optionally, a 4-bit "reserved field" is further extended, so that a length of the broadcast TWT information field is an integer multiple of a length of one byte.

The first low-delay service may be transmitted within the first transmission time, or may be transmitted beyond the first transmission time. Therefore, with reference to the probability distribution of the channel access delay shown in FIG. 7, when the WLAN network is not seriously congested, the following state may exist: Most data packets of the first low-delay service can be transmitted within a maximum delay constraint of the first low-delay service, and only a few data packets of the first low-delay service cannot be transmitted within the maximum delay constraint of the first low-delay service. To separately set different first transmission times for a plurality of first terminals, a first transmission time corresponding to each first terminal may be idle in most cases, thereby causing resource waste.

Based on the first shared transmission time provided in this application, one shared first transmission time is set for the plurality of first terminals, and a plurality of first terminals that fail to transmit first low-delay services beyond the first transmission time may transmit the first low-delay services within the first shared transmission time. In this way, protected transmission is implemented within the first shared transmission time for a small quantity of data packets of the first low-delay service that cannot be transmitted within the maximum delay constraint, so that the small quantity of data packets may also meet a delay requirement of the first low-delay service. This solves the problem that when network congestion is not severe, setting different first transmission times for different first terminals causes resource waste, and a transmission delay of the first low-delay service cannot be reduced without setting the first transmission time. Then, if services of a terminal that has not sent the service report information to the access point includes the first low-delay service, the terminal may also transmit the first low-delay service within the first shared transmission time, thereby reducing signaling overheads of the terminal.

In addition, in some embodiments, in addition to the information about the first transmission time and the identifier of the first low-delay service, the broadcast frame further includes identification information of each of the at least one first terminal. In other words, in this embodiment, the access point limits a usage object of the first transmission time. In this scenario, "the first transmission time" in this application may be understood as "a first scheduled transmission time" or "a first scheduled Restricted TWT SP".

In an example, the identification information of the terminal in this application may be an AID, the access point may allocate one AID to each terminal in the BSS, and one AID may uniquely identify one terminal in the BSS.

In this scenario, if services of a terminal that receives the broadcast frame includes the first low-delay service, the terminal further needs to further determine, based on the identification information of the first terminal in the broadcast frame, whether transmission of the first low-delay service can be performed within the first transmission time.

In an example, that the terminal transmits the first low-delay service within the first transmission time when services of the terminal include the first low-delay service may include: When the services of the terminal include the first low-delay service, and the identification information, of the at least one first terminal, in the broadcast frame includes identification information of the terminal, the terminal transmits the first low-delay service within the first transmission time. In other words, a usage object, of the first transmission time, specified by the access point in the broadcast frame can transmit the first low-delay service within the first transmission time.

In an example, that the terminal transmits the first low-delay service within the first transmission time when services of the terminal include the first low-delay service may include: When the services of the terminal include the first low-delay service, and the identification information, of the at least one first terminal, in the broadcast frame does not include identification information of the terminal,
the terminal sends second request information to the access point, where the second request information requests to transmit the first low-delay service within the first transmission time, or the second request information requests to join the first transmission time, or the second information requests a qualification for using the first transmission time.

Correspondingly, the access point receives the second request information, and sends response information of the second request information to the terminal, where the response information indicates that the terminal is allowed to transmit the first low-delay service within the first transmission time, or the response information indicates that the terminal is allowed to join the first transmission time, or the response information configures, for the terminal, the qualification for using the first transmission time.

Correspondingly, the terminal receives the response information, and transmits the first low-delay service within the first transmission time.

That is, if services of a terminal include the first low-delay service, and the terminal is not a usage object, of the first transmission time, specified by the access point in the broadcast frame, the terminal may send second request information to the access point, to request the access point to use the first transmission time.

It should be noted that before the terminal receives the response information of the access point, the terminal stops channel contention within the first transmission time.

In another example, that the terminal transmits the first low-delay service within the first transmission time when services of the terminal include the first low-delay service may include: When the services of the terminal include the first low-delay service, and the identification information, of the at least one first terminal, in the broadcast frame does not include identification information of the terminal,
the terminal sends third request information to the access point, where the third request information requests the access point to configure a third transmission time for the terminal to transmit the first low-delay service of the terminal.

Correspondingly, the access point receives the third request information, and sends response information of the third request information, where the response information configures a third transmission time for the terminal to transmit the first low-delay service of the terminal. Certainly, the response information may also indicate the access point to reject the request of the terminal, that is, does not configure the third transmission time for the terminal.

Correspondingly, the terminal receives the response information, and when the response information configures the third transmission time for the terminal, transmits the first low-delay service within the third transmission time. When the response information indicates to reject the request of the terminal, the terminal performs channel contention beyond the first transmission time to transmit the first low-delay service.

That is, if services of a terminal include the first low-delay service, and the terminal is not a usage object, of the first transmission time, specified by the access point in the broadcast frame, the terminal may send third request information to the access point, to request the access point to configure the third transmission time to transmit the first low-delay service.

In an example, when the broadcast frame includes the information about the first transmission time, the identifier of the first low-delay service, and the identification information of each of the at least one first terminal, the broadcast frame may be carried in a first field in a TWT element, and the first field carries TWT information. For example, when a frame structure of the TWT element is shown in FIG. 11, the first field is a TWT parameter information field in a TWT parameter information list field.

Specifically, the information about the first transmission time may be carried in a target wake time field, a nominal minimum TWT wake duration field, and a TWT wake interval mantissa field, which respectively indicate a start time of the first transmission time, a duration of the first transmission time, and an interval between adjacent first transmission times.

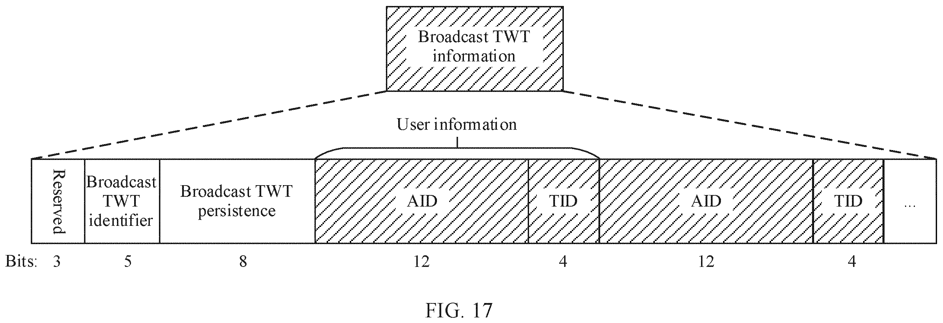

The identifier of the first low-delay service and the identifier information of the at least one first terminal may be carried in a broadcast TWT information field. For example, when the identifier of the first low-delay service is negotiated by each terminal and the access point, as shown in FIG. 17, one or more user information fields may be extended based on the broadcast TWT information field in the frame structure shown in FIG. 10. One user information field corresponds to one of the at least one first terminal. Each user information field includes a 12-bit AID field and a 4-bit TID field, the AID field carries identification information of the first terminal, and the TID field carries an identifier that is of the first low-delay service and that is negotiated by the first terminal and the access point.

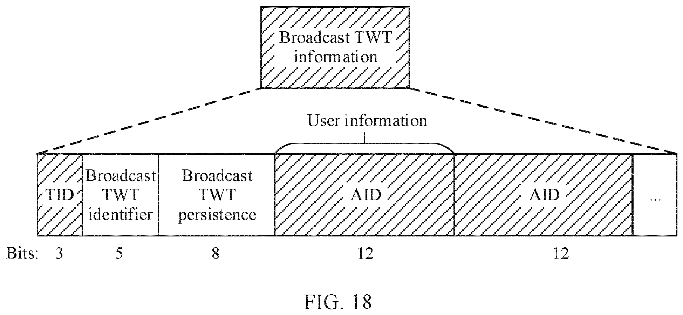

Alternatively, when the identifier of the first low-delay service is uniformly defined by the access point or the standard, as shown in FIG. 18, a 3-bit "reserved field" of the broadcast TWT information field in the frame structure shown in FIG. 10 may be used as a "TID" field to carry the identifier of the first low-delay service. In addition, one or more user information fields are further extended, and one user information field corresponds to one of the at least one first terminal. Each user information field includes a 12-bit AID field, and the 12-bit AID field carries identification information of the first terminal.

Based on this solution, the access point may limit the usage object of the first transmission time. If a terminal is not a usage object, of the first transmission time, indicated by the access point, even if services of the terminal include the first low-delay service, the terminal cannot transmit the first low-delay service within the first transmission time without consent of the access point. In this way, a quantity of terminals that transmit the first low-delay service within the first transmission time can be further reduced, and a channel access delay and a service transmission delay can be further reduced.

In some embodiments, on a basis that the broadcast frame includes the identification information of each of the at least one first terminal, the broadcast frame may further include a quantity of the at least one first terminal. That is, the access point indicates, in the broadcast frame, a usage object of the first transmission time and a quantity of the usage objects.

In an example, when the broadcast frame includes the information about the first transmission time, the identifier of the first low-delay service, the identification information of each of the at least one first terminal, and the quantity of the at least one first terminal, the broadcast frame may be carried in a first field in a TWT element, and the first field carries TWT information. For example, when a frame structure of the TWT element is shown in FIG. 11, the first field is a TWT parameter information field in a TWT parameter information list field.

Specifically, the information about the first transmission time may be carried in a target wake time field, a nominal minimum TWT wake duration field, and a TWT wake interval mantissa field, which respectively indicate a start time of the first transmission time, a duration of the first transmission time, and an interval between adjacent first transmission times.

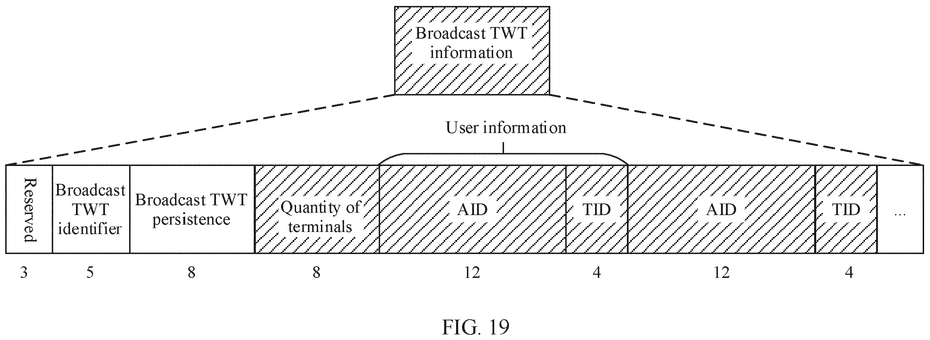

The identifier of the first low-delay service, the identifier information of the at least one first terminal, and the quantity of the at least one first terminal may be carried in a broadcast TWT information field. For example, when the identifier of the first low-delay service is negotiated by each terminal and the access point, refer to FIG. 19. A structure of the broadcast TWT information field is similar to that shown in FIG. 17, and a difference lies in that a terminal quantity field is added before a first user information field, and the terminal quantity field indicates the quantity of at least one first terminal.

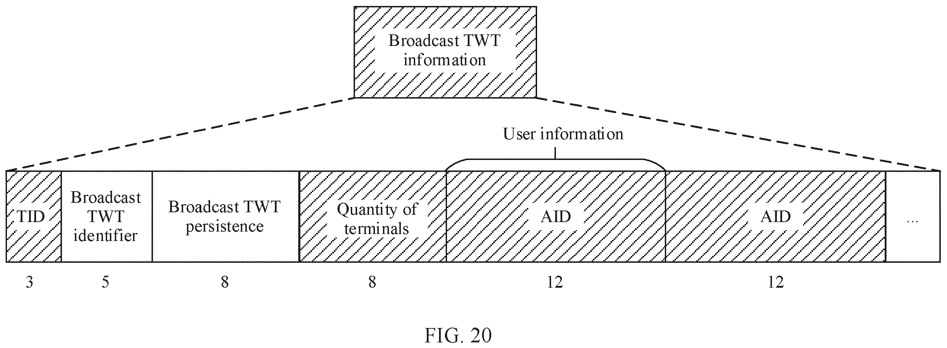

Alternatively, when the identifier of the first low-delay service is uniformly defined by the access point or the standard, refer to FIG. 20. A structure of the broadcast TWT information field is similar to that shown in FIG. 18, and a difference lies in that a terminal quantity field is added before a first user information field, and the terminal quantity field indicates the quantity of at least one first terminal.

Based on this solution, the access point indicates, in the broadcast TWT information field of the TWT element, a quantity N of first terminals that can use the first transmission time defined by the TWT parameter information field of the TWT element, so that the terminal can correctly parse the broadcast TWT information field. For example, the quantity of the first terminals is a quantity of user information fields included in the broadcast TWT information field of the TWT element. If the services of the terminal include the first low-delay service, identification information of the terminal is not found yet through parsing N user information fields, it indicates that the usage object, of the first transmission time, indicated by the access point by using the broadcast TWT information field does not include the terminal. In this case, if a current TWT parameter information field is the last TWT parameter information field in the TWT parameter information list field, or the TWT parameter information list field includes only the current TWT parameter information field, the terminal may stop parsing the TWT element, and further send the second request information or the third request information to the access point. If the current TWT parameter information field is not the last TWT parameter information field of the TWT parameter information list field, the terminal continues to parse a next TWT parameter information field.

In some other embodiments, on a basis that the broadcast frame includes the identification information of each of the at least one first terminal, the broadcast frame may further include first indication information corresponding to each first terminal. The first indication information indicates whether the corresponding first terminal is the last terminal to transmit the first low-delay service within the first transmission time.

In an example, when the broadcast frame includes the information about the first transmission time, the identifier of the first low-delay service, the identification information of each of the at least one first terminal, and the first indication information corresponding to each first terminal, the broadcast frame may be carried in a first field in a TWT element, and the first field carries TWT information. For example, when a frame structure of the TWT element is shown in FIG. 11, the first field is a TWT parameter information field in a TWT parameter information list field.

Specifically, the information about the first transmission time may be carried in a target wake time field, a nominal minimum TWT wake duration field, and a TWT wake interval mantissa field, which respectively indicate a start time of the first transmission time, a duration of the first transmission time, and an interval between adjacent first transmission times.

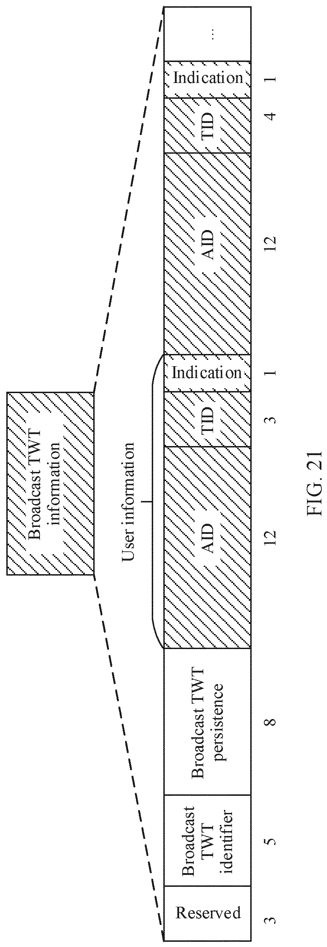

The identifier of the first low-delay service, the identifier information of the at least one first terminal, and the first indication information corresponding to each first terminal may be carried in a broadcast TWT information field. For example, when the identifier of the first low-delay service is negotiated by each terminal and the access point, refer to FIG. 21. A structure of the broadcast TWT information field is similar to that shown in FIG. 17, and a difference lies in that an indication field is added to each user information field, and the indication field carries the first indication information corresponding to the first terminal.

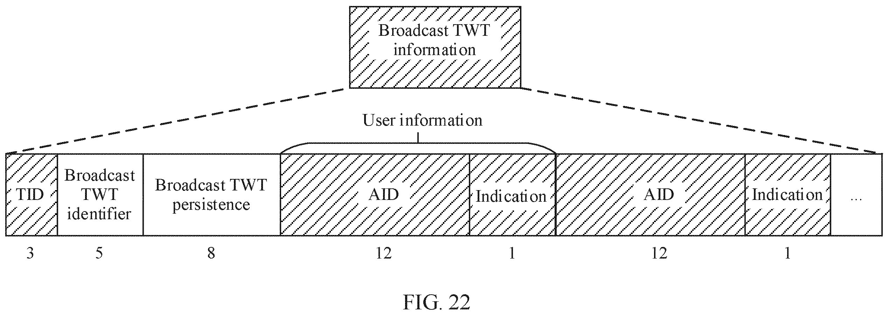

Alternatively, when the identifier of the first low-delay service is uniformly defined by the access point or the standard, refer to FIG. 22. A structure of the broadcast TWT information field is similar to that shown in FIG. 18, and an indication field is added to each user information field, and the indication field carries the first indication information corresponding to the first terminal.

Based on this solution, the access point sends, in the broadcast TWT information field of the TWT element, the first indication information corresponding to each first terminal, so that the terminal can correctly parse the broadcast TWT information field. For example, if the services of the terminal include the first low-delay service, first indication information of a user information field parsed by the terminal indicates that a terminal corresponding to the user information field is the last terminal to transmit the first low-delay service within the first transmission time, and when the last terminal to transmit the first low-delay service within the first transmission time is not a terminal that currently parses the TWT element, it indicates that the usage object, of the first transmission time, indicated by the access point by using the broadcast TWT information field does not include the terminal. In this case, if a current TWT parameter information field is the last TWT parameter information field in the TWT parameter information list field, or the TWT parameter information list field includes only the current TWT parameter information field, the terminal may stop parsing the TWT element, and further send the second request information or the third request information to the access point. If the current TWT parameter information field is not the last TWT parameter information field of the TWT parameter information list field, the terminal may continue to parse a next TWT parameter information field.

In some embodiments, the broadcast frame may further include information about a second transmission time and an identifier of a second low-delay service, the second transmission time is used to transmit the second low-delay service, and the second low-delay service is a low-delay service of at least one second terminal. The second low-delay service and the first low-delay service are different types of low-delay services. For example, the first low-delay service is a video call service, and the second low-delay service is a real-time game service.

In other words, the access point may configure transmission times of a plurality of low-delay services in one broadcast frame. Based on this solution, the access point does not need to send a plurality of broadcast frames to separately configure a transmission time of each type of low-delay service, thereby further reducing signaling overheads.

It should be noted that all features related to the first low-delay service and the first transmission time are applicable to the second low-delay service and the second transmission time.

In an example, the broadcast frame may further include identification information of each of the at least one second terminal.

In an example, the broadcast frame further includes a quantity of at least one second terminal.

In an example, the broadcast frame may further include second indication information corresponding to each of the at least one second terminal, and the second indication indicates whether the second terminal is the last terminal to transmit the second low-delay service within the second transmission time.

For other related features of the second low-delay service and the second transmission time, refer to the foregoing or the following descriptions of the first low-delay service and the first transmission time respectively. Details are not described herein again.

In some embodiments, it is assumed that a first shared transmission time is configured for the broadcast frame. When transmitting the first low-delay service in the first shared transmission time, a first terminal may detect that current network quality cannot meet a delay requirement of the first low-delay service. For example, there are a large quantity of first terminals in the BSS, and all the plurality of first terminals may perform channel contention within the first shared transmission time.

In this scenario, if the access point further configures a first scheduled transmission time in addition to the first shared transmission time, the first terminal may send third request information to the access point, to request to transmit the first low-delay service within the first scheduled transmission time.

If the access point does not configure the first scheduled transmission time other than the first shared transmission time, the first terminal may send first request information to the access point, where the first request information requests the access point to configure the first transmission time for the first terminal. It may be understood that, in this case, the first terminal requests to configure the first scheduled transmission time.

In an example, the first request information may include second type information and a first identifier, and the second type information indicates a type of the first request information. Specifically, the second type information indicates that the type of the first request information is a transmission time configuration request. The first identifier is a transmission time identifier not allocated by the access point or a preset transmission time identifier. After receiving the first request information, the access point may determine, by using the first identifier, that the first terminal requests to configure the first scheduled transmission time, and then may configure the first scheduled transmission time for the first terminal.

In an example, the first request information may be carried in a TWT element. Specifically, the first identifier is carried in a first field of a TWT element, the second type information is carried in a first subfield of a second field of the TWT element, the first field carries TWT parameter information, and the second field carries TWT control information.

For example, when a frame structure of the TWT element is shown in FIG. 11, the first field is one TWT parameter information field in a TWT parameter information list field. Specifically, the first identifier is carried in a broadcast TWT identifier field in the broadcast TWT information field of the TWT parameter information field. The second field is a control field in the TWT element, the first subfield is a TWT type field, and when a value of the first subfield is a second value, it indicates the second type information.

Based on this solution, when the terminal finds, within the first shared transmission time, that the delay requirement of the first low-delay service cannot be met, the terminal may request the access point to configure the first scheduled transmission time for the terminal, thereby reducing the transmission delay of the first low-delay service.

In some embodiments, when transmission of the first low-delay service of the terminal ends, the terminal may send notification information to the access point, and the notification information notifies that transmission of the first low-delay service of the terminal ends.

In an example, after receiving the notification information of the terminal, if the first transmission time is not configured, the access point may update, based on the notification information, information (for example, a QoS requirement), about the low-delay service, collected by the access point. If the first transmission time has been configured, the access point may adjust a length of the first transmission time based on the notification information.

In some embodiments, the access point obtains a first transmission opportunity (transmission opportunity, TXOP), and sets a first NAV, where an end moment of the first NAV meets one of the following conditions: The end moment of the first NAV is the same as an end moment of the first transmission time, or later than an end moment of the first transmission time.

A start moment of the first NAV meets one of the following conditions: The start moment of the first NAV is the same as a start moment of the first transmission time, earlier than a start moment of the first transmission time, or later than a start moment of the first transmission time, and an interval between the start moment of the first NAV and the start moment of the first transmission time is a priority interframe space (priority interframe space, PIFS).

In this application, different manners of obtaining the first TXOP by the access point may also cause different start moments of the first NAV set by the access point.

According to the invention, after receiving the broadcast frame and determining the first transmission time configured by the access point, the terminal should ensure that sending of all data is completed before the start moment of the first transmission time, that is, at the start moment of the first transmission time, usually no terminal is sending data.

In this scenario, if a third terminal performs channel contention before a start moment of the first transmission time to obtain a second TXOP, the third terminal may compare whether the second TXOP can end before the start moment of the first transmission time. If the second TXOP cannot end before the start moment of the first transmission time, the third terminal may send transfer information to the access point, where the transfer information includes a length of the second TXOP and third indication information, and the third indication information indicates to transfer the second TXOP to the access point. Correspondingly, that the access point obtains the first TXOP includes: The access point receives the transfer information from the third terminal, and determines the first TXOP based on the transfer information. After obtaining the first TXOP, the access point sets the first NAV to protect the first transmission time, wherein a channel usage time set by the first NAV is within the first TXOP, or is the first TXOP.

It should be noted that services of the third terminal may include the first low-delay service, that is, the third terminal may be the first terminal. Alternatively, services of the third terminal may not include the first low-delay service, that is, the third terminal may not be the first terminal.

In an example, the transfer information sent by the third terminal to the access point is sent within the second TXOP, sending of the transfer information occupies a part time of the second TXOP. Therefore, a length of the second TXOP included in the transfer information may be a remaining time length of the second TXOP.

In an example, the third terminal may transfer the second TXOP to the access point by using a reverse direction protocol (reverse direction protocol, RDP) procedure.

In some embodiments, before transferring the second TXOP to the access point by using the reverse protocol, the third terminal may further determine whether the first TXOP determined by the access point based on the transfer information definitely ends before the end moment of the first transmission time. If yes, it indicates that the first NAV set by the access point cannot protect the entire first transmission time. In this case, the third terminal may select not to send the transfer information, that is, not to transfer the second TXOP. If no, the third terminal may indicate a start moment of the second TXOP to the access point, or a maximum length, of the first TXOP, set by the access point.

In an example, the maximum length, of the first TXOP, indicated by the third terminal may be less than a maximum length, of the TXOP, specified in the protocol. This is because the first TXOP is inherited from the second TXOP. Therefore, a sum of a time of the second TXOP used for transmission of the transfer information and the maximum length of the first TXOP needs to be less than the maximum length, of the TXOP, specified in the protocol. Therefore, the maximum length, of the first TXOP, indicated by the third terminal is less than the maximum length, of the TXOP, specified in the protocol.

In some embodiments, after receiving the transfer information, that the access point determines the first TXOP based on the transfer information may include: The access point determines, based on the third indication information, that the third terminal transfers the second TXOP to the access point, and determine whether a time period from a first moment to the end moment of the first transmission time exceeds the maximum length, of the TXOP, specified in the protocol, where the first moment may be a moment at which the access point receives the transfer information, or may be the start moment, of the second TXOP, indicated by the third terminal to the access point. If the time period from the first moment to the end moment of the first transmission time does not exceed the maximum length, of the TXOP, specified in the protocol, when the end moment of the second TXOP is earlier than the end moment of the first transmission time, the end moment of the second TXOP is extended to the end moment of the first transmission time, to obtain the first TXOP; or when the end moment of the second TXOP is later than the end moment of the first transmission time, the end moment of the second TXOP is shortened to the end moment of the first transmission time, to obtain the first TXOP.

In some embodiments, after the access point obtains the first TXOP, if the start moment of the first TXOP is earlier than the start moment of the first transmission time, the start moment, of the first NAV, set by the access point may be earlier than the start moment of the first transmission time.

In some embodiments, when the access point sets the start moment of the first NAV earlier than the start moment of the first transmission time, because the access point has downlink data of all terminals in the BSS, or can schedule uplink data transmission of all terminals. Therefore, before the start moment of the first NAV and the start moment of the first transmission time, the access point may further schedule uplink data transmission or send downlink data.

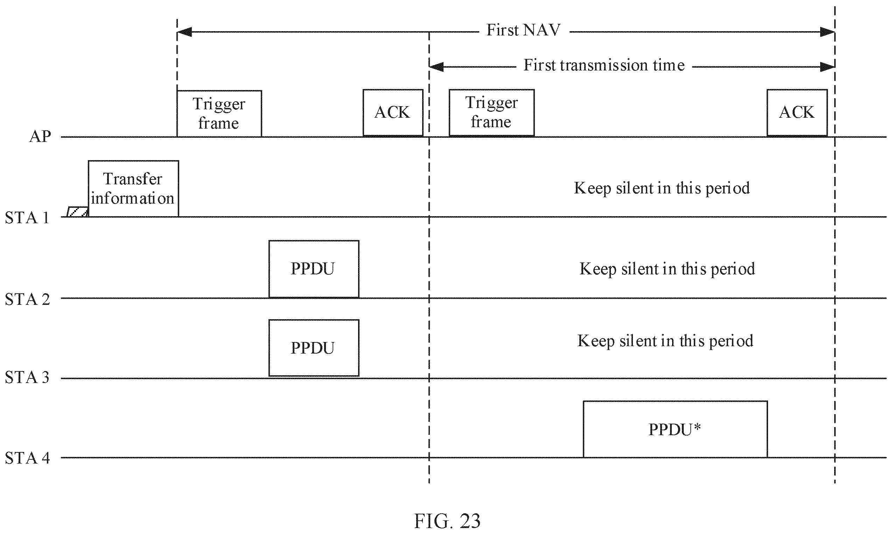

For example, refer to FIG. 23. An example in which the third terminal is a STA 1, services of the STA 1, a STA 2, and a STA 3 do not include the first low-delay service, and services of a STA 4 includes the first low-delay service is used. If the STA 1 obtains the second TXOP before the start moment of the first transmission time, and determines that the second TXOP cannot end before the start moment of the first transmission time, the STA 1 sends transfer information to the access point. After receiving the transfer information, the access point obtains the first TXOP, and sends a trigger frame to set the first NAV. At the same time, transmission of uplink PPDUs of the STA 2 and the STA 3 is scheduled by using the trigger frame, and an ACK frame is sent to feed back a transmission status of the uplink PPDUs of the STA 2 and the STA 3. After the first transmission time starts, the access point schedules, by using the trigger frame, the STA 4 to transmit a PPDU (denoted as a PPDU* in FIG. 23) of the first low-delay service within the first transmission time.

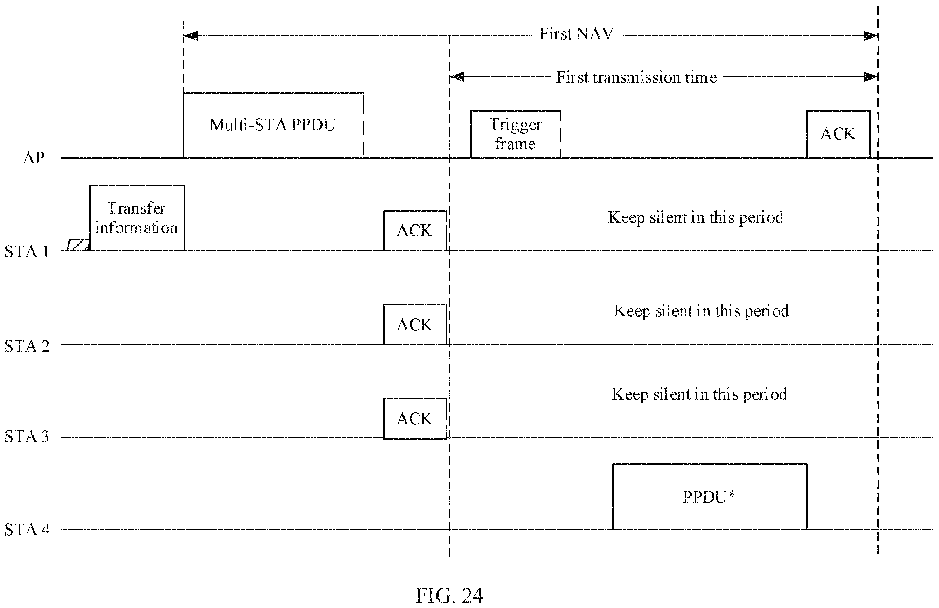

Alternatively, refer to FIG. 24. An example in which the third terminal is a STA 1, services of the STA 1, a STA 2, and a STA 3 do not include the first low-delay service, and services of a STA 4 includes the first low-delay service is used. If the STA 1 obtains the second TXOP before the start moment of the first transmission time, and determines that the second TXOP cannot end before the start moment of the first transmission time, the STA 1 sends transfer information to the access point. After receiving the transfer information, the access point obtains the first TXOP, and sends downlink multi-STA PPDUs of the STA 1, the STA 2, and the STA 3, and sets first NAVs in the multi-STA PPDUs. After receiving the multi-STA PPDU, the STA 1, the STA 2, and the STA 3 separately send an ACK frame to the access point to feed back a receiving status of the multi-STA PPDU. After the first transmission time starts, the access point schedules, by using the trigger frame, the STA 4 to transmit a PPDU (denoted as a PPDU* in FIG. 24) of the first low-delay service within the first transmission time.

Based on this solution, in the first NAV, a terminal other than the access point cannot use the channel to transmit data. Therefore, when the start moment of the first NAV is earlier than the start moment of the first transmission time, if the access point does not perform any operation, it is equivalent that the access point protects the channel but does not use the channel, and the terminal cannot use the channel due to NAV protection, resulting in resource waste. In this case, the access point schedules the uplink data transmission or sends the downlink data, so that the channel can be fully utilized within a time period between the start moment of the first NAV and the start moment of the first transmission time, thereby improving channel utilization and reducing resource waste.

In another possible implementation, even if the access point configures the first transmission time, and the terminal whose services do not include the first low-delay service stops channel contention within the first transmission time, the following two cases still exist: first, some terminals in the BSS do not support configuration of a transmission time of a service, and therefore such terminals do not parse the broadcast frame sent by the access point; and second, the access point does not obtain the first TXOP before the first transmission time starts. In the two cases, a terminal may still send data by using the EDCA within the first transmission time. In this way, a channel access delay of the first terminal is increased, and a transmission delay of the first low-delay service is increased.

Based on this, that the access point obtains the first TXOP may include: The access point sends a control frame at a PIFS moment after the start moment of the first transmission time, to obtain the first TXOP. A time period from a time when the terminal detects that a channel is idle to a time when the terminal accesses the channel is "DIFS + backoff time", and DIFS = PIFS + SIFS. Therefore, the access point sends the control frame at the PIFS moment after the start time of the first transmission time, so that the access point obtains the channel before all terminals, to obtain the first TXOP.

In an example, if the access point detects that the channel is busy at the PIFS moment after the start time of the first transmission time, the access point may send the control frame at the PIPS moment when the channel is idle, to obtain the first TXOP.

In addition, the access point may set the first NAV in the sent control frame used to obtain the first TXOP. In this case, the start moment of the first NAV is later than the start moment of the first transmission time, and an interval between the start moment of the first NAV and the start moment of the first transmission time is greater than or equal to the PIFS.

In still another possible implementation, before the start moment of the first transmission time, the access point determines whether a duration between a current moment and the end moment of the first transmission time exceeds a maximum duration that can be protected by the NAV, or the access point determines whether a duration between a current moment and the end moment of the first transmission time exceeds the maximum TXOP length specified in the protocol, and if no, the access point obtains the first TXOP.

In an example, if the access point detects that the channel is busy at the current moment, the access point may send the control frame at the PIPS moment after the channel is idle, to obtain the first TXOP. If the channel is idle at the current moment, the access point may immediately send the control frame or send the control frame after the PIFS interval, to obtain the first TXOP. It may be understood that in this implementation, the access point may obtain the channel before all terminals.

In addition, the access point may set the first NAV in the sent control frame used to obtain the first TXOP. In this case, the start moment of the first NAV is earlier than the start moment of the first transmission time.

Based on the foregoing solution, the access point may obtain the channel within the first transmission time before all the terminals, and set the first NAV to perform channel protection. Therefore, impact of the terminal that does not support configuration of a transmission time of a service within the first transmission time on transmission of the first low-delay service performed by the first terminal can be reduced, a transmission delay of the first low-delay service is further reduced, and service performance is improved.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments, methods and/or steps implemented by the access point may also be implemented by a component (for example, a chip or a circuit) that can be used in the access point, and methods and/or steps implemented by the terminal may also be implemented by a component (for example, a chip or a circuit) that can be used in the terminal.

The foregoing mainly describes the solutions provided in this application from the perspective of interaction between devices. Correspondingly, an embodiment further provides a communication apparatus, and the communication apparatus is configured to implement the foregoing methods. The communication apparatus may be the access point in the foregoing method embodiments, an apparatus including the foregoing access point, or a component that can be used in the access point. Alternatively, the communication apparatus may be the terminal in the foregoing method embodiments, an apparatus including the foregoing terminal, or a component that can be used in the terminal.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

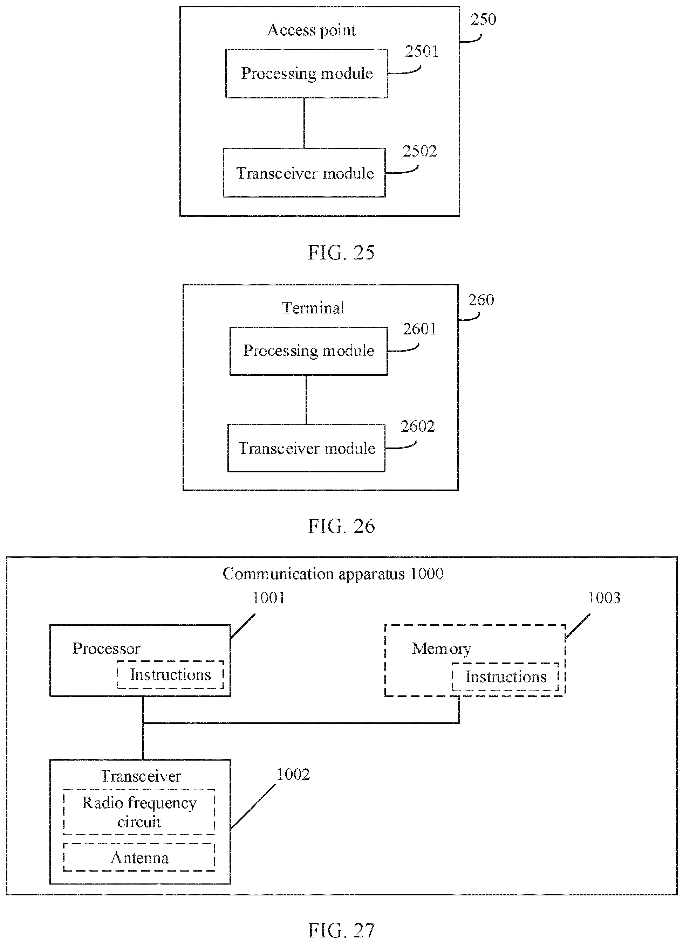

In an implementation scenario, for example, the communication apparatus is the access point in the foregoing method embodiment. FIG. 25 is a schematic diagram of a structure of an access point 250. The access point 250 includes a processing module 2501 and a transceiver module 2502.

In some embodiments, the access point 250 may further include a storage module (not shown in FIG. 25), configured to store program instructions and data.

In some embodiments, the transceiver module 2502 may also be referred to as a transceiver unit, and is configured to implement a sending function and/or a receiving function. The transceiver module 2502 may include a transceiver circuit, a transceiver machine, a transceiver, or a communication interface.

In some embodiments, the transceiver module 2502 may include a receiving module and a sending module, respectively configured to perform receiving and sending steps performed by the access point in the foregoing method embodiments, and/or another process configured to support the technology described in this specification. The processing module 2501 may be configured to perform processing steps (for example, determining and obtaining) performed by the access point in the foregoing method embodiments, and/or another process configured to support the technology described in this specification.

In an example, the processing module 2501 is configured to generate a broadcast frame, the broadcast frame includes information about a first transmission time and an identifier of a first low-delay service, the first transmission time is used to transmit the first low-delay service, and the first low-delay service is a low-delay service of at least one first terminal; and the transceiver module 2502 is configured to send the broadcast frame.

In a possible implementation, the broadcast frame further includes identification information of each of the at least one first terminal.

In a possible implementation, the broadcast frame further includes a quantity of at least one first terminal.

In a possible implementation, the broadcast frame further includes first indication information corresponding to each first terminal, and the first indication information indicates whether the first terminal is the last terminal to transmit the first low-delay service within the first transmission time.

In a possible implementation, the processing module 2501 is further configured to obtain a first transmission opportunity TXOP and set a first network allocation vector NAV, and an end moment of the first NAV meets one of the following conditions: The end moment of the first NAV is the same as an end moment of the first transmission time, or later than an end moment of the first transmission time; and a start moment of the first NAV meets one of the following conditions: The start moment of the first NAV is the same as a start moment of the first transmission time, earlier than a start moment of the first transmission time, or later than a start moment of the first transmission time, and an interval between the start moment of the first NAV and the start moment of the first transmission time is a PIFS.

The start moment of the first NAV is earlier than the start moment of the first transmission time; the transceiver module 2502 is further configured to receive transfer information from a third terminal, the transfer information includes a length of a second TXOP and third indication information, the second TXOP is a TXOP obtained through contention by the third terminal, and the third indication information indicates to transfer the second TXOP to the access point; and that the processing module 2501 is further configured to obtain the first TXOP includes: the processing module 2501 is further configured to determine the first TXOP based on the transfer information.

In a possible implementation, the start moment of the first NAV is earlier than the start moment of the first transmission time; and before the start moment of the first transmission time, the processing module 2501 is further configured to schedule uplink data transmission, or the transceiver module 2502 is further configured to send downlink data.

In a possible implementation, the broadcast frame further includes information about a second transmission time and an identifier of a second low-delay service, the second transmission time is used to transmit the second low-delay service, and the second low-delay service is a low-delay service of at least one second terminal.

In a possible implementation, the broadcast frame further includes identification information of each of the at least one second terminal.

In a possible implementation, the broadcast frame further includes a quantity of second terminals in a plurality of terminals.

In a possible implementation, the broadcast frame further includes second indication information corresponding to each second terminal, and the second indication information indicates whether the second terminal is the last terminal to transmit the second low-delay service within the second transmission time.

In a possible implementation, the broadcast frame is carried in a first field of a target wake time TWT element, and the first field carries TWT parameter information.

In a possible implementation, the transceiver module 2502 is further configured to receive first request information from the first terminal, and the first request information requests to configure the first transmission time for the first terminal.

In a possible implementation, the first request information includes second type information and a first identifier, the second type information indicates a type of the first request information, and the first identifier is a transmission time identifier not allocated by the access point or a preset transmission time identifier.

In a possible implementation, the first identifier is carried in a first field of a target wake time TWT element, the second type information is carried in a first subfield of a second field of the TWT element, the first field carries TWT parameter information, and the second field carries TWT control information.

In a possible implementation, the transceiver module 2502 is further configured to receive notification information from the first terminal, and the notification information notifies the first terminal that transmission of the first low-delay service ends.

All related content of the steps in the foregoing method embodiments may be cited in function descriptions of the corresponding functional modules. Details are not described herein again.

In this application, the access point 250 is presented in a form of obtaining each function module through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in terms of hardware implementation, a person skilled in the art may figure out that the access point 250 may be in a form of the WLAN device 300 shown in FIG. 3.

In an example, the processor 301 in the WLAN device 300 shown in FIG. 3 may invoke the computer-executable instructions stored in the memory 304, to implement functions/implementation processes of the processing module 2501 in FIG. 25, and the transceiver 302 in the WLAN device 300 shown in FIG. 3 may implement functions/implementation processes of the transceiver module 2502 in FIG. 25.

In some embodiments, when the access point 250 in FIG. 25 is a chip or a chip system, a function/implementation process of the processing module 2501 may be implemented by using an input/output interface (or a communication interface) of the chip or the chip system. A function/implementation process of the transceiver module 2502 may be implemented by using a processor (or a processing circuit) of a chip or a chip system.

Because the access point 250 provided in this embodiment may perform the foregoing service transmission method, for a technical effect that can be achieved by the access point, refer to the foregoing method embodiments. Details are not described herein again.

In an implementation scenario, for example, the communication apparatus is the terminal in the foregoing method embodiment. FIG. 26 is a schematic diagram of a structure of a terminal 260. The terminal 260 includes a processing module 2601 and a transceiver module 2602.

In some embodiments, the terminal 260 may further include a storage module (not shown in FIG. 26), configured to store program instructions and data.

In some embodiments, the transceiver module 2602 may also be referred to as a transceiver unit, and is configured to implement a sending function and/or a receiving function. The transceiver module 2602 may include a transceiver circuit, a transceiver machine, a transceiver, or a communication interface.

In some embodiments, the transceiver module 2602 may include a receiving module and a sending module, respectively configured to perform receiving and sending steps performed by the terminal in the foregoing method embodiments, and/or another process configured to support the technology described in this specification. The processing module 2601 may be configured to perform processing steps (for example, determining and obtaining) performed by the terminal in the foregoing method embodiments, and/or another process configured to support the technology described in this specification.

In an example, the transceiver module 2602 is configured to receive a broadcast frame from an access point, the broadcast frame includes information about a first transmission time and an identifier of a first low-delay service, the first transmission time is used to transmit the first low-delay service, and the first low-delay service is a low-delay service of at least one first terminal; and the transceiver module 2602 is further configured to transmit the first low-delay service within the first transmission time when services of the terminal include the first low-delay service; or the processing module 2601 is configured to stop channel contention within the first transmission time when services of the terminal do not include the first low-delay service.

In a possible implementation, the broadcast frame further includes identification information of each of the at least one first terminal.

In a possible implementation, that the transceiver module 2602 is further configured to transmit the first low-delay service within the first transmission time when the services of the terminal include the first low-delay service includes: When the services of the terminal include the first low-delay service, and identification information of the at least one first terminal includes identification information of the terminal, the transceiver module 2602 is further configured to transmit the first low-delay service within the first transmission time.

In a possible implementation, that the transceiver module 2602 is further configured to transmit the first low-delay service within the first transmission time when the services of the terminal include the first low-delay service includes:
when the services of the terminal include the first low-delay service, and identification information of the at least one first terminal does not include identification information of the terminal, the transceiver module 2602 is further configured to send second request information to the access point, and the second request information requests to transmit the first low-delay service within the first transmission time;
the transceiver module 2602 is further configured to receive response information from the access point, and the response information indicates that the terminal is allowed to transmit the first low-delay service within the first transmission time; and
the transceiver module 2602 is further configured to transmit the first low-delay service within the first transmission time.

In a possible implementation, before a start moment of the first transmission time, the processing module 2601 is further configured to perform channel contention to obtain a second transmission opportunity TXOP; and the transceiver module 2602 is further configured to send transfer information to the access point, the transfer information includes a length of the second TXOP and third indication information, and the third indication information indicates to transfer the second TXOP to the access point.

In a possible implementation, the transceiver module 2602 is further configured to send service report information to the access point, the service report information includes first type information and quality of service QoS requirement information of a low-delay service of the terminal, and the first type information indicates a type of the service report information.

In a possible implementation, the QoS requirement information of the low-delay service of the terminal is carried in a first field of a target wake time TWT element, the first type information is carried in a first subfield of a second field of the TWT element, the first field carries TWT parameter information, and the second field carries TWT control information.

In a possible implementation, the QoS requirement information of the low-delay service of the terminal is carried in an A-control A-control field of a MAC frame or is carried in a first element, the first element is a service information element of a traffic specification TSPEC or the first element is an element obtained based on a service information element of the TSPEC, the first type information is carried in a first subfield of a second field of a TWT element, and the second field carries TWT control information.

In a possible implementation, when the services of the terminal include the first low-delay service, the transceiver module 2602 is further configured to send first request information to the access point, and the first request information requests to configure the first transmission time for the terminal.

In a possible implementation, the first request information includes second type information and a first identifier, the second type information indicates a type of the first request information, and the first identifier is a transmission time identifier not allocated by the access point or a preset transmission time identifier.

In a possible implementation, the first identifier is carried in the first field of the target wake time TWT element, the second type information is carried in the first subfield of the second field of the TWT element, the first field carries the TWT parameter information, and the second field carries the TWT control information.

In a possible implementation, when the services of the terminal include the first low-delay service, the transceiver module 2602 is further configured to send notification information to the access point, and the notification information notifies that transmission of the first low-delay service of the terminal ends.

All related content of the steps in the foregoing method embodiments may be cited in function descriptions of the corresponding functional modules. Details are not described herein again.

In this application, the terminal 260 is presented in a form of obtaining each function module through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in terms of hardware implementation, a person skilled in the art may figure out that the terminal 260 may be in a form of the WLAN device 300 shown in FIG. 3.

In an example, the processor 301 in the WLAN device 300 shown in FIG. 3 may invoke the computer-executable instructions stored in the memory 304, to implement functions/implementation processes of the processing module 2601 in FIG. 26, and the transceiver 302 in the WLAN device 300 shown in FIG. 3 may implement functions/implementation processes of the transceiver module 2602 in FIG. 26.

In some embodiments, when the terminal 260 in FIG. 26 is a chip or a chip system, a function/implementation process of the processing module 2601 may be implemented by using an input/output interface (or a communication interface) of the chip or the chip system. A function/implementation process of the transceiver module 2602 may be implemented by using a processor (or a processing circuit) of a chip or a chip system.

Because the terminal 260 provided in this embodiment may perform the foregoing service transmission method, for a technical effect that can be achieved by the access point, refer to the foregoing method embodiments. Details are not described herein again.

In a possible product form, the access point and the terminal in embodiments of this application may alternatively be implemented by using one or more field programmable gate arrays (field programmable gate array, FPGA), programmable logic devices (programmable logic device, PLD), controllers, state machines, logic gates, discrete hardware components, any other appropriate circuits, or any combination of circuits that can perform the various functions described in this application.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in this embodiment of this application.

In some embodiments, an embodiment of this application further provides a communication apparatus (for example, the communication apparatus may be a chip or a chip system). The communication apparatus includes an interface circuit and a logic circuit, and the interface circuit is configured to obtain input information and/or output output information. The logic circuit is configured to perform the method in any one of the foregoing method embodiments, to process and/or generate the output information based on the input information.

When the communication apparatus is used to implement the function of the access point in the foregoing method embodiments:
in a possible implementation, the output information may be a broadcast frame, the broadcast frame includes information about a first transmission time and an identifier of a first low-delay service, the first transmission time is used to transmit the first low-delay service, and the first low-delay service is a low-delay service of at least one first terminal.

In a possible implementation, the input information may be transfer information, the transfer information includes a length of the second TXOP and third indication information, the second TXOP is a TXOP obtained by a third terminal through contention, and the third indication information indicates to transfer the second TXOP to the access point. Correspondingly, the processing based on the input information may be: determining a first TXOP based on the transfer information.

In a possible implementation, the input information may be second request information, and the second request information requests to transmit the first low-delay service within the first transmission time. Correspondingly, the processing based on the input information may be: sending response information, where the response information indicates that the terminal is allowed to transmit the first low-delay service within the first transmission time.

In a possible implementation, the input information may be first request information, and the first request information requests to configure the first transmission time for the first terminal. Correspondingly, the processing based on the input information may be: generating the broadcast frame based on the first request information.

In a possible implementation, the input information may be notification information, and the notification information notifies that transmission of the first low-delay service of the terminal ends. Correspondingly, the processing based on the input information may be: updating, based on the notification information, a QoS requirement, of the low-delay service, collected by the access point.

When the communication apparatus is used to implement the function of the terminal in the foregoing method embodiments:
in a possible implementation, the input information may be a broadcast frame, the broadcast frame includes information about a first transmission time and an identifier of a first low-delay service, the first transmission time is used to transmit the first low-delay service, and the first low-delay service is a low-delay service of at least one first terminal. Correspondingly, the processing based on the input information may be: when services of the terminal include the first low-delay service, the terminal transmits the first low-delay service within the first transmission time.

In a possible implementation, the output information may be second request information, and the second request information requests to transmit the first low-delay service within the first transmission time. Correspondingly, the input information may be response information, and the response information indicates that the terminal is allowed to transmit the first low-delay service within the first transmission time.

In a possible implementation, the output information may be transfer information, the transfer information includes a length of the second TXOP and third indication information, the second TXOP is a TXOP obtained by a third terminal through contention, and the third indication information indicates to transfer the second TXOP to the access point.

In a possible implementation, the output information may be service report information, the service report information includes first type information and quality of service QoS requirement information of a low-delay service of the terminal, and the first type information indicates a type of the service report information.

In a possible implementation, the output information may be first request information, and the first request information requests to configure the first transmission time for the first terminal.

In a possible implementation, the output information may be notification information, and the notification information notifies that transmission of the first low-delay service of the terminal ends.

The communication apparatus provided in this embodiment may perform the method in the foregoing method embodiments. Therefore, for technical effects that can be achieved by the communication apparatus, refer to the foregoing method embodiments. Details are not described herein again.

In a possible product form, the access point and the terminal in embodiments of this application may be implemented by using general bus architectures.

For ease of description, FIG. 27 is a schematic diagram of a structure of a communication apparatus 1000 according to an embodiment of this application. The communication apparatus 1000 includes a processor 1001 and a transceiver 1002. The communication apparatus 1000 may be an access point, a terminal, or a chip thereof. FIG. 27 shows only main components of the communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a radio frequency circuit and an antenna. The radio frequency circuit is mainly configured to perform conversion between a baseband signal and a radio frequency signal and process a radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

The processor 1001, the transceiver 1002, and the memory 1003 may be connected through a communication bus.

After the communication apparatus is powered on, the processor 1001 may read the software program in the memory 1003, interpret and execute instructions of the software program, and process data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the apparatus described above.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A service transmission method, wherein the method comprises:
generating, by an access point (250), a broadcast frame, wherein the broadcast frame comprises information about a first transmission time and an identifier of a first low-delay service, the first transmission time is used to transmit the first low-delay service, and the first low-delay service is a low-delay service of at least one first terminal; and
sending, by the access point (250), the broadcast frame,
wherein the method further comprises:
obtaining, by the access point (250), a first transmission opportunity, TXOP, and setting a first network allocation vector, NAV, to protect the first transmission time, wherein a channel usage time set by the first NAV is within the first TXOP, or is the first TXOP, and wherein when a start moment of the first NAV is earlier than a start moment of the first transmission time, the obtaining, by the access point (250), a first TXOP comprises:
receiving, by the access point (250), transfer information from a third terminal (SAT 1), wherein the transfer information comprises a length of a second TXOP and third indication information, the second TXOP is a TXOP obtained through contention by the third terminal, and the third indication information indicates to transfer the second TXOP to the access point (250); and
determining, by the access point (250), the first TXOP based on the transfer information.

2. The method according to claim 1, wherein the broadcast frame further comprises identification information of each of the at least one first terminal.

3. The method according to claim 2, wherein the broadcast frame further comprises a quantity of the at least one first terminal.

4. The method according to claim 2, wherein the broadcast frame further comprises first indication information corresponding to each first terminal, and the first indication information indicates whether the first terminal is the last terminal to transmit the first low-delay service within the first transmission time.

5. The method according to any one of claims 1 to 4, wherein an end moment of the first NAV meets one of the following conditions:
the end moment of the first NAV is the same as an end moment of the first transmission time, or
later than an end moment of the first transmission time; and
the start moment of the first NAV meets one of the following conditions:
the start moment of the first NAV is the same as a start moment of the first transmission time,
earlier than a start moment of the first transmission time, or
later than a start moment of the first transmission time, and an interval between the start moment of the first NAV and the start moment of the first transmission time is a priority interframe space PIFS.

6. The method according to claim 1 or 5, wherein the start moment of the first NAV is earlier than the start moment of the first transmission time, and before the start moment of the first transmission time, the method further comprises:
scheduling, by the access point, uplink data transmission or sending downlink data.

7. The method according to any one of claims 1 to 6, wherein the broadcast frame further comprises information about a second transmission time and an identifier of a second low-delay service, the second transmission time is used to transmit the second low-delay service, and the second low-delay service is a low-delay service of at least one second terminal.

8. A service transmission method, wherein the method comprises:
receiving, by a terminal (260), a broadcast frame from an access point (250), wherein the broadcast frame comprises information about a first transmission time and an identifier of a first low-delay service, the first transmission time is used to transmit the first low-delay service, and the first low-delay service is a low-delay service of at least one first terminal; and
transmitting, by the terminal (260), the first low-delay service within the first transmission time when services of the terminal (260) comprise the first low-delay service; or
stopping, by the terminal (260), channel contention within the first transmission time when services of the terminal (260) do not comprise the first low-delay service,
wherein before a start moment of the first transmission time, the method further comprises:
performing, by the terminal (260), channel contention to obtain a second transmission opportunity TXOP; and
sending, by the terminal (260), transfer information to the access point (250), wherein the transfer information comprises a length of the second TXOP and third indication information, and the third indication information indicates to transfer the second TXOP to the access point (250).

9. The method according to claim 8, wherein the broadcast frame further comprises identification information of each of the at least one first terminal.

10. The method according to claim 9, wherein the transmitting, by the terminal (260), the first low-delay service within the first transmission time when services of the terminal (260) comprise the first low-delay service comprises:
when the services of the terminal (260) comprise the first low-delay service, and identification information of the at least one first terminal comprises identification information of the terminal (260), transmitting, by the terminal (260), the first low-delay service within the first transmission time.

11. The method according to claim 10, wherein the transmitting, by the terminal (260), the first low-delay service within the first transmission time when services of the terminal (260) comprise the first low-delay service comprises:
when the services of the terminal (260) comprise the first low-delay service, and identification information of the at least one first terminal does not comprise identification information of the terminal (260), sending, by the terminal (260), second request information to the access point (250), wherein the second request information requests to transmit the first low-delay service within the first transmission time;
receiving, by the terminal (260), response information from the access point (250), wherein the response information indicates that the terminal is allowed to transmit the first low-delay service within the first transmission time; and
transmitting, by the terminal (260), the first low-delay service within the first transmission time.

12. The method according to any one of claims 8 to 11, wherein before the receiving, by a terminal, a broadcast frame from an access point (250), the method further comprises:
sending, by the terminal (260), service report information to the access point (250), wherein the service report information comprises first type information and quality of service, QoS, requirement information of a low-delay service of the terminal (260), and the first type information indicates a type of the service report information.

13. An apparatus (1000), configured to implement the method according to any one of claims 1 to 12.

## Patentansprüche

1. Dienstübertragungsverfahren, wobei das Verfahren umfasst:
Erzeugen, durch einen Zugriffspunkt (250), eines Broadcast-Frames, wobei der Broadcast-Frame Informationen über eine erste Übertragungszeit und einen Identifizierer eines ersten Diensts mit geringer Verzögerung umfasst, die erste Übertragungszeit verwendet wird, um den ersten Dienst mit geringer Verzögerung zu übertragen, und der erste Dienst mit geringer Verzögerung ein Dienst mit geringer Verzögerung mindestens eines ersten Endgeräts ist; und
Senden, durch den Zugriffspunkt (250), des Broadcast-Frames,
wobei das Verfahren ferner umfasst:
Erhalten, durch den Zugriffspunkt (250), einer ersten Übertragungsmöglichkeit (TXOP) und Festlegen eines ersten Netzwerkzuweisungsvektors (NAV), um die erste Übertragungszeit zu schützen, wobei eine Kanalverwendungszeit, die durch den ersten NAV festgelegt wird, innerhalb der ersten TXOP liegt oder die erste TXOP ist und wobei, wenn ein Startmoment des ersten NAV früher als ein Startmoment der ersten Übertragungszeit ist, das Erhalten, durch den Zugriffspunkt (250), einer ersten TXOP umfasst:
Empfangen, durch den Zugriffspunkt (250), von Transferinformationen von einem dritten Endgerät (SAT 1), wobei die Transferinformationen eine Länge einer zweiten TXOP und dritte Angabeinformationen umfassen, die zweite TXOP eine TXOP, die über eine Konkurrenz durch das dritte Endgerät erhalten wird, ist und die dritten Angabeinformationen angeben, die zweite TXOP an den Zugriffspunkt (250) zu transferieren; und
Bestimmen, durch den Zugriffspunkt (250), der ersten TXOP basierend auf den Transferinformationen.

2. Verfahren nach Anspruch 1, wobei der Broadcast-Frame ferner Identifikationsinformationen jedes des mindestens einen ersten Endgeräts umfasst.

3. Verfahren nach Anspruch 2, wobei der Broadcast-Frame ferner eine Anzahl des mindestens einen ersten Endgeräts umfasst.

4. Verfahren nach Anspruch 2, wobei der Broadcast-Frame ferner erste Angabeinformationen, die jedem ersten Endgerät entsprechen, umfasst und die ersten Angabeinformationen angeben, ob das erste Endgerät das letzte Endgerät, das den ersten Dienst mit geringer Verzögerung innerhalb der ersten Übertragungszeit überträgt, ist.

5. Verfahren nach einem der Ansprüche 1 bis 4, wobei ein Endmoment des ersten NAV eine der folgenden Bedingungen erfüllt:
der Endmoment des ersten NAV ist der gleiche wie ein Endmoment der ersten Übertragungszeit oder später als ein Endmoment der ersten Übertragungszeit; und
der Startmoment des ersten NAV eine der folgenden Bedingungen erfüllt:
der Startmoment des ersten NAV ist der gleiche wie ein Startmoment der ersten Übertragungszeit, früher als ein Startmoment der ersten Übertragungszeit oder später als ein Startmoment der ersten Übertragungszeit, und ein Intervall zwischen dem Startmoment des ersten NAV und dem Startmoment der ersten Übertragungszeit ist ein Prioritäts-Interframe-Raum (PIFS).

6. Verfahren nach Anspruch 1 oder 5, wobei der Startmoment des ersten NAV früher als der Startmoment der ersten Übertragungszeit ist und vor dem Startmoment der ersten Übertragungszeit liegt, wobei das Verfahren ferner umfasst:
Planen, durch den Zugriffspunkt, einer Uplink-Datenübertragung oder Senden von Downlink-Daten.

7. Verfahren nach einem der Ansprüche 1 bis 6, wobei der Broadcast-Frame ferner Informationen über eine zweite Übertragungszeit und einen Identifizierer eines zweiten Diensts mit geringer Verzögerung umfasst, die zweite Übertragungszeit verwendet wird, um den zweiten Dienst mit geringer Verzögerung zu übertragen, und der zweite Dienst mit geringer Verzögerung ein Dienst mit geringer Verzögerung des mindestens einen zweiten Endgeräts ist.

8. Dienstübertragungsverfahren, wobei das Verfahren umfasst:
Empfangen, durch ein Endgerät (260), eines Broadcast-Frames von einem Zugriffspunkt (250), wobei der Broadcast-Frame Informationen über eine erste Übertragungszeit und einen Identifizierer eines ersten Diensts mit geringer Verzögerung umfasst, die erste Übertragungszeit verwendet wird, um den ersten Dienst mit geringer Verzögerung zu übertragen, und der erste Dienst mit geringer Verzögerung ein Dienst mit geringer Verzögerung mindestens eines ersten Endgeräts ist; und
Übertragen, durch das Endgerät (260), des ersten Diensts mit geringer Verzögerung innerhalb der ersten Übertragungszeit, wenn die Dienste des Endgeräts (260) den ersten Dienst mit geringer Verzögerung umfassen; oder
Stoppen, durch das Endgerät (260), einer Kanalkonkurrenz innerhalb der ersten Übertragungszeit, wenn die Dienste des Endgeräts (260) nicht den ersten Dienst mit geringer Verzögerung umfassen,
wobei, vor einem Startmoment der ersten Übertragungszeit, das Verfahren ferner umfasst:
Durchführen, durch das Endgerät (260), der Kanalkonkurrenz, um eine zweite Übertragungsmöglichkeit (TXOP) zu erhalten; und
Senden, durch das Endgerät (260), von Transferinformationen an den Zugriffspunkt (250), wobei die Transferinformationen eine Länge der zweiten TXOP und dritte Angabeinformationen umfassen und die dritten Angabeinformationen angeben, die zweite TXOP an den Zugriffspunkt (250) zu transferieren.

9. Verfahren nach Anspruch 8, wobei der Broadcast-Frame ferner Identifikationsinformationen jedes des mindestens einen ersten Endgeräts umfasst.

10. Verfahren nach Anspruch 9, wobei das Übertragen, durch das Endgerät (260), des ersten Diensts mit geringer Verzögerung innerhalb der ersten Übertragungszeit, wenn Dienste des Endgeräts (260) den ersten Dienst mit geringer Verzögerung umfassen, umfasst: wenn die Dienste des Endgeräts (260) den ersten Dienst mit geringer Verzögerung umfassen und Identifikationsinformationen des mindestens einen ersten Endgeräts Identifikationsinformationen des Endgeräts (260) umfassen, Übertragen, durch das Endgerät (260), des ersten Diensts mit geringer Verzögerung innerhalb der ersten Übertragungszeit.

11. Verfahren nach Anspruch 10, wobei das Übertragen, durch das Endgerät (260), des ersten Diensts mit geringer Verzögerung innerhalb der ersten Übertragungszeit, wenn Dienste des Endgeräts (260) den ersten Dienst mit geringer Verzögerung umfassen, umfasst:
wenn die Dienste des Endgeräts (260) den ersten Dienst mit geringer Verzögerung umfassen und Identifikationsinformationen des mindestens einen ersten Endgeräts keine Identifikationsinformationen des Endgeräts (260) umfassen, Senden, durch das Endgerät (260), zweiter Anforderungsinformationen an den Zugriffspunkt (250), wobei die zweiten Anforderungsinformationen anfordern, den ersten Dienst mit geringer Verzögerung innerhalb der ersten Übertragungszeit zu übertragen; Empfangen, durch das Endgerät (260), von Antwortinformationen von dem Zugriffspunkt (250), wobei die Antwortinformationen angeben, dass es dem Endgerät erlaubt ist, den ersten Dienst mit geringer Verzögerung innerhalb der ersten Übertragungszeit zu übertragen; und
Übertragen, durch das Endgerät (260), des ersten Diensts mit geringer Verzögerung innerhalb der ersten Übertragungszeit.

12. Verfahren nach einem der Ansprüche 8 bis 11, wobei, vor dem Empfangen, durch ein Endgerät, eines Broadcast-Frames von einem Zugriffspunkt (250), das Verfahren ferner umfasst:
Senden, durch das Endgerät (260), von Dienstberichtsinformationen an den Zugriffspunkt (250), wobei die Dienstberichtsinformationen erste Typinformationen und Dienstgüte(QoS)-Voraussetzungsinformationen eines Diensts mit geringer Verzögerung des Endgeräts (260) umfassen und die ersten Typinformationen einen Typ der Dienstberichtsinformationen angeben.

13. Einrichtung (1000), die konfiguriert ist, um das Verfahren nach einem der Ansprüche 1 bis 12 zu implementieren.

## Revendications

1. Procédé de transmission de service, dans lequel le procédé comprend :
la génération, par un point d'accès (250), d'une trame de diffusion, dans lequel la trame de diffusion comprend des informations sur un premier temps de transmission et un identifiant d'un premier service à faible délai, le premier temps de transmission est utilisé pour transmettre le premier service à faible délai, et le premier service à faible délai est un service à faible délai d'au moins un premier terminal ; et
l'envoi, par le point d'accès (250), de la trame de diffusion,
dans lequel le procédé comprend en outre :
l'obtention, par le point d'accès (250), d'une première opportunité de transmission, TXOP, et la définition d'un premier vecteur d'allocation de réseau, NAV, pour protéger le premier temps de transmission, dans lequel un temps d'utilisation de canal défini par le premier NAV est compris dans le premier TXOP, ou est le premier TXOP, et dans lequel, lorsqu'un moment de démarrage du premier NAV est antérieur à un moment de démarrage du premier temps de transmission, l'obtention, par le point d'accès (250), d'un premier TXOP comprend :
la réception, par le point d'accès (250), d'informations de transfert provenant d'un troisième terminal (SAT 1), dans lequel les informations de transfert comprennent une longueur d'un deuxième TXOP et des troisièmes informations d'indication, le deuxième TXOP étant un TXOP obtenu par contention par le troisième terminal, et les troisièmes informations d'indication indiquent de transférer le deuxième TXOP au point d'accès (250) ; et
la détermination, par le point d'accès (250), du premier TXOP sur la base des informations de transfert.

2. Procédé selon la revendication 1, dans lequel la trame de diffusion comprend en outre des informations d'identification de chacun de l'au moins un premier terminal.

3. Procédé selon la revendication 2, dans lequel la trame de diffusion comprend en outre une quantité de l'au moins un premier terminal.

4. Procédé selon la revendication 2, dans lequel la trame de diffusion comprend en outre des premières informations d'indication correspondant à chaque premier terminal, et les premières informations d'indication indiquent si le premier terminal est le dernier terminal à transmettre le premier service à faible délai dans le premier temps de transmission.

5. Procédé selon l'une quelconque des revendications 1 à 4, dans lequel un moment de fin de la première NAV satisfait l'une des conditions suivantes :
le moment de fin de la première NAV est identique à un moment de fin du premier temps de transmission, ou postérieur à un moment de fin du premier temps de transmission ; et
le moment de départ de la première NAV satisfait l'une des conditions suivantes :
le moment de départ de la première NAV est identique au moment de départ du premier temps de transmission, antérieur au moment de départ du premier temps de transmission, ou
postérieur à un moment de départ du premier temps de transmission, et un intervalle entre le moment de départ de la première NAV et le moment de départ du premier temps de transmission est un espace inter-trames prioritaire PIFS.

6. Procédé selon la revendication 1 ou 5, dans lequel le moment de départ de la première NAV est antérieur au moment de départ du premier temps de transmission, et avant le moment de départ du premier temps de transmission, le procédé comprend en outre : la programmation, par le point d'accès, de la transmission de données en liaison montante ou de l'envoi de données en liaison descendante.

7. Procédé selon l'une quelconque des revendications 1 à 6, dans lequel la trame de diffusion comprend en outre des informations sur un second temps de transmission et un identificateur d'un second service à faible délai, le second temps de transmission est utilisé pour transmettre le second service à faible délai, et le second service à faible délai est un service à faible délai d'au moins un deuxième terminal.

8. Procédé de transmission de service, dans lequel le procédé comprend :
la réception, par un terminal (260), d'une trame de diffusion provenant d'un point d'accès (250), dans lequel la trame de diffusion comprend des informations sur un premier temps de transmission et un identifiant d'un premier service à faible délai, le premier temps de transmission étant utilisé pour transmettre le premier service à faible délai, et le premier service à faible délai est un service à faible délai d'au moins un premier terminal ; et
la transmission, par le terminal (260), du premier service à faible délai dans le premier temps de transmission lorsque les services du terminal (260) comprennent le premier service à faible délai ; ou
l'arrêt, par le terminal (260), de la contention de canal pendant le premier temps de transmission lorsque des services du terminal (260) ne comprennent pas le premier service à faible délai,
dans lequel, avant un moment de départ du premier temps de transmission, le procédé comprend en outre :
l'exécution, par le terminal (260), d'une contention de canal pour obtenir une seconde possibilité de transmission TXOP ; et
l'envoi, par le terminal (260), d'informations de transfert au point d'accès (250), dans lequel les informations de transfert comprennent une longueur de la seconde TXOP et des troisièmes informations d'indication, et les troisièmes informations d'indication indiquent de transférer la seconde TXOP au point d'accès (250).

9. Procédé selon la revendication 8, dans lequel la trame de diffusion comprend en outre des informations d'identification de chacun de l'au moins un premier terminal.

10. Procédé selon la revendication 9, dans lequel la transmission, par le terminal (260), du premier service à faible délai dans le premier temps de transmission lorsque les services du terminal (260) comprennent le premier service à faible délai comprend : lorsque les services du terminal (260) comprennent le premier service à faible délai et que les informations d'identification de l'au moins un premier terminal comprennent des informations d'identification du terminal (260), la transmission, par le terminal (260), du premier service à faible délai dans le premier temps de transmission.

11. Procédé selon la revendication 10, dans lequel la transmission, par le terminal (260), du premier service à faible délai dans le premier temps de transmission lorsque les services du terminal (260) comprennent le premier service à faible délai comprend :
lorsque les services du terminal (260) comprennent le premier service à faible délai et que les informations d'identification de l'au moins un premier terminal ne comprennent pas des informations d'identification du terminal (260), l'envoi, par le terminal (260), de secondes informations de demande au point d'accès (250), dans lequel les secondes informations de demande demandent de transmettre le premier service à faible délai dans le premier temps de transmission ;
la réception, par le terminal (260), d'informations de réponse provenant du point d'accès (250), dans lequel les informations de réponse indiquent que le terminal est autorisé à transmettre le premier service à faible délai dans le premier temps de transmission ; et
la transmission, par le terminal (260), du premier service à faible délai dans le premier temps de transmission.

12. Procédé selon l'une quelconque des revendications 8 à 11, dans lequel, avant la réception, par un terminal, d'une trame de diffusion provenant d'un point d'accès (250), le procédé comprend en outre :
l'envoi, par le terminal (260), d'informations de rapport de service au point d'accès (250), dans lequel les informations de rapport de service comprennent des informations de premier type et des informations d'exigences de qualité de service, QoS, d'un service à faible délai du terminal (260), et les informations de premier type indiquent un type des informations de rapport de service.

13. Appareil (1000) configuré pour mettre en œuvre le procédé selon l'une quelconque des revendications 1 à 12.
